# EUROPEAN PATENT APPLICATION

(11) **EP 3 871 757 A1**
(43) Date of publication of application: **01.09.2021**
(21) Application number: 19876391.4
(22) Date of filing: 21.10.2019
(51) Int. Cl.: B01D 53/92, F01N 3/01

(54) **ENGINE EXHAUST GAS OZONE PURIFICATION SYSTEM AND METHOD**

(30) Priority: 22.10.2018 CN 201811227573; 13.12.2018 CN 201811525874; 20.12.2018 CN 201811563797; 20.03.2019 CN 201910211284; 25.04.2019 CN 201910340445; 25.04.2019 CN 201910340443; 20.05.2019 CN 201910418872; 28.05.2019 CN 201910452169; 05.07.2019 CN 201910605156; 15.07.2019 CN 201910636710
(71) Applicant: Shanghai Bixiufu Enterprise Management Co., Ltd., Shanghai 201112 (CN)
(72) Inventor: TANG, Wanfu, Shanghai 201112 (CN); WANG, Daxiang, Shanghai 201112 (CN); XI, Yong, Shanghai 201112 (CN)
(74) Representative: Neumann, Ditmar
(86) International application number: PCT/CN2019/112132
(87) International publication number: WO 2020/083159

(57) **Abstract**

The invention provides an engine tail gas ozone purification system and method. The engine tail gas ozone purification system comprises a reaction field configured to mix and react an ozone stream with a tail gas stream, without a need to add a large amount of urea and with good purification effect.

## Description

### Technical Field

The present invention belongs to the field of environmental protection, and it relates to an engine tail gas ozone purification system and method.

### Background Art

Environmental pollution caused by engines mainly comes from the exhaust products of engines, i.e., engine tail gas. At present, the following conventional technical route is used for tail gas purification of diesel engines. An oxidation catalyst (DOC) is used to remove hydrocarbons (THC) and CO, while low-valence NO is oxidized into high-valence NO₂. After the DOC, the particulates (PM) are filtered with a diesel particulate filter DPF; urea is sprayed after the diesel particulate filter DPF, the urea is decomposed into ammonia NH₃ in the exhaust, NH₃ then undergoes a selective catalytic reduction reaction with NO₂ over a selective catalyst (SCR) to generate nitrogen N₂ and water, and finally excessive NH₃ is oxidized into N₂ and water on an ammonia oxidation catalyst (ASC). A large amount of urea needs to be added for purification of engine tail gas in the prior art, and the purifying effect is ordinary.

### Summary of the Invention

In view of all of the above shortcomings of the prior art, the present invention aims at providing an engine tail gas ozone purification system and method for solving at least one of the problems in the prior art that the tail gas purification requires a large amount of urea and the tail gas purification effect is general. According to the invention, it is found that high-valence nitrogen oxides generated by the reaction of the ozone and nitrogen oxide in the tail gas is not the final product. There are enough volatile organic compounds VOC in the tail gas to generate sufficient water, which can be fully reacted with the high-valence nitrogen oxides to generate nitric acid. Therefore, the treatment of engine tail gas with ozone results in a better effect of removing NOₓ with ozone, achieving an unexpected technical effect.

The invention provides an engine tail gas ozone purification system and method, wherein the engine tail gas ozone purification system comprises a reaction field configured to mix and react an ozone stream and a tail gas stream, without a need to add a large amount of urea and with good purification effect.

In order to achieve the above objects and other relevant objects, the following examples are provided in the present invention.
1. Example 1 of the present invention provides an engine tail gas ozone purification system.
2. Example 2 of the present invention includes the features of any one of Example 1 and further includes a tail gas ozone purification system, wherein the tail gas ozone purification system includes a reaction field for mixing and reacting an ozone stream with a tail gas stream.
3. Example 3 of the present invention includes the features of Example 2, wherein the reaction field includes a pipeline.
4. Example 4 of the present invention includes the features of Example 2 or 3, wherein the reaction field includes a reactor.
5. Example 5 of the present invention includes the features of Example 4, wherein the reactor has a reaction chamber in which the tail gas is mixed and reacted with the ozone.
6. Example 6 of the present invention includes the features of Example 4 or 5, wherein the reactor includes a plurality of honeycomb-shaped cavities configured to provide spaces for mixing and reacting the tail gas with the ozone, wherein the honeycomb-shaped cavities are provided with gaps therebetween which are configured to introduce a cold medium and control a reaction temperature of the tail gas with the ozone.
7. Example 7 of the present invention includes any one of Examples 4 to 6, wherein the reactor includes a plurality of carrier units which provide reaction sites.
8. Example 8 of the present invention includes any one of Examples 4 to 7, wherein the reactor includes a catalyst unit which is configured to promote oxidization reaction of the tail gas.
9. Example 9 of the present invention includes any one of Examples 2 to 8, wherein the reaction field is provided with an ozone entrance which is at least one selected from a spout, a spray grid, a nozzle, a swirl nozzle, and a spout provided with a venturi tube.
10. Example 10 of the present invention includes any one of Examples 2 to 9, wherein the reaction field is provided with an ozone entrance through which the ozone enters the reaction field to contact the tail gas, and the ozone entrance is provided in at least one of the following directions: a direction opposite to a flow direction of the tail gas, a direction perpendicular to the flow direction of the tail gas, a direction tangent to the flow direction of the tail gas, a direction inserted in the flow direction of the tail gas, and multiple directions.
11. Example 11 of the present invention includes the features of any one of Examples 2 to 10, wherein the reaction field includes an exhaust pipe, a heat retainer device, or a catalytic converter.
12. Example 12 of the present invention includes the features of any one of Examples 2 to 11, wherein the reaction field has a temperature of -50-200 °C.
13. Example 13 of the present invention includes the features of Example 12, wherein the reaction field has a temperature of 60-70 °C.
14. Example 14 of the present invention includes the features of any one of Examples 1 to 13, wherein the tail gas ozone purification system further includes an ozone source configured to provide an ozone stream.
15. Example 15 of the present invention includes the features of Example 14, wherein the ozone source includes an ozone storage unit and/or an ozone generator.
16. Example 16 of the present invention includes the features of Example 15, wherein the ozone generator includes one or a combination of generators selected from an extended-surface discharge ozone generator, a power frequency arc ozone generator, a high-frequency induction ozone generator, a low-pressure ozone generator, an ultraviolet ozone generator, an electrolyte ozone generator, a chemical agent ozone generator, and a ray irradiation particle generator.
17. Example 17 of the present invention includes the features of Example 15, wherein the ozone generator includes an electrode, a catalyst layer is provided on the electrode, and the catalyst layer includes an oxidation catalytic bond cracking selective catalyst layer.
18. Example 18 of the present invention includes the features of Example 17, wherein the electrode includes a high-voltage electrode or a high-voltage electrode having a barrier dielectric layer, when the electrode includes a high-voltage electrode, the oxidation catalytic bond cracking selective catalyst layer is provided on a surface of the high-voltage electrode, and when the electrode includes a high-voltage electrode having a barrier dielectric layer, the oxidation catalytic bond cracking selective catalyst layer is provided on a surface of the barrier dielectric layer.
19. Example 19 of the present invention includes the features of Example 18, wherein the barrier dielectric layer is at least one material selected from a ceramic plate, a ceramic pipe, a quartz glass plate, a quartz plate, and a quartz pipe.
20. Example 20 of the present invention includes the features of Example 18, wherein when the electrode includes a high-voltage electrode, the oxidation catalytic bond cracking selective catalyst layer has a thickness of 1-3 mm, and when the electrode includes a high-voltage electrode having a barrier dielectric layer, the load capability of the oxidation catalytic bond cracking selective catalyst layer is 1-12 wt% of the barrier dielectric layer.
21. Example 21 of the present invention includes the features of any one of Examples 17 to 20, wherein the oxidation catalytic bond cracking selective catalyst layer includes the following components in percentages by weight:
   5-15% of an active component; and
   85-95% of a coating layer,
   wherein, the active component is at least one material selected from compounds of a metal M and a metallic element M, and the metallic element M is at least one element selected from the group consisting of an alkaline earth metal element, a transition metal element, a fourth main group metal element, a noble metal element and a lanthanoid rare earth element;
   the coating layer is at least one material selected from the group consisting of aluminum oxide, cerium oxide, zirconium oxide, manganese oxide, metal composite oxide, a porous material, and a layered material, and the metal composite oxide includes a composite oxide of one or more metals selected from aluminum, cerium, zirconium, and manganese.
22. Example 22 of the present invention includes the features of Example 21, wherein the alkaline earth metal element is at least one element selected from the group consisting of magnesium, strontium, and calcium.
23. Example 23 of the present invention includes the features of Example 21, wherein the transition metal element is at least one element selected from the group consisting of titanium, manganese, zinc, copper, iron, nickel, cobalt, yttrium, and zirconium.
24. Example 24 of the present invention includes the features of Example 21, wherein the fourth main group metal element is tin.
25. Example 25 of the present invention includes the features of Example 21, wherein the noble metal element is at least one element selected from the group consisting of platinum, rhodium, palladium, gold, silver, and iridium.
26. Example 26 of the present invention includes the features of Example 21, wherein the lanthanoid rare earth element is at least one element selected from the group consisting of lanthanum, cerium, praseodymium, and samarium.
27. Example 27 of the present invention includes the features of Example 21, wherein the compound of the metallic element M is at least one compound selected from the group consisting of oxides, sulfides, sulfates, phosphates, carbonates, and perovskites.
28. Example 28 of the present invention includes the features of Example 21, wherein the porous material is at least one material selected from the group consisting of a molecular sieve, diatomaceous earth, zeolite, and a carbon nanotube.
29. Example 29 of the present invention includes the features of Example 21, wherein the layered material is at least one material selected from the group consisting of graphene and graphite.
30. Example 30 of the present invention includes the features of any one of Examples 1 to 29, wherein the tail gas ozone purification system further includes an ozone amount control device configured to control the amount of ozone so as to effectively oxidize gas components to be treated in tail gas, and the ozone amount control device includes a control unit.
31. Example 31 of the present invention includes the features of Example 30, wherein the control unit controls the amount of ozone required in the mixing and reaction according to the contents of components in the tail gas before the ozone treatment.
32. Example 32 of the present invention includes the features of Example 30 or 31, wherein the ozone amount control device further includes a pre-ozone-treatment tail gas component detection unit configured to detect the contents of components in the tail gas before the ozone treatment.
33. Example 33 of the present invention includes the features of Example 32, wherein the pre-ozone-treatment tail gas component detection unit includes a first nitrogen oxide detection unit configured to detect the nitrogen oxide content in the tail gas before the ozone treatment.
34. Example 34 of the present invention includes the features of Example 32 or 33, wherein the pre-ozone-treatment tail gas component detection unit includes a first CO detection unit configured to detect the CO content in the tail gas before the ozone treatment.
35. Example 35 of the present invention includes the features of Examples 32 to 34, wherein the pre-ozone treatment tail gas component detection unit includes a first volatile organic compound detection unit configured to detect the content of volatile organic compound in the tail gas before the ozone treatment.
36. Example 36 of the present invention includes the features of Examples 33 to 35, wherein the control unit controls the amount of ozone required in the mixing and reaction according to an output value of at least one of the pre-ozone-treatment tail gas component detection units.
37. Example 37 of the present invention includes the features of any one of Examples 30 to 36, wherein the control unit is configured to control the amount of ozone required in the mixing and reaction according to a preset mathematical model.
38. Example 38 of the present invention includes the features of any one of Examples 30 to 37, wherein the control unit is configured to control the amount of ozone required in the mixing and reaction according to a theoretically estimated value.
39. Example 39 of the present invention includes the features of any one of the Example [38][AD1], wherein the theoretically estimated value is a molar ratio of an ozone introduction amount to a substance to be treated in the tail gas, which is in the range of 2-10.
40. Example 40 of the present invention includes the features of any one of Examples 30 to 39, wherein the control unit controls the amount of ozone required in the mixing and reaction according to the contents of components in the tail gas after the ozone treatment.
41. Example 41 of the present invention includes the features of any one of Examples 30 to 40, wherein the ozone amount control device includes a post-ozone-treatment tail gas component detection unit configured to detect the contents of components in the tail gas after the ozone treatment.
42. Example 42 of the present invention includes the features of Example 41, wherein the post-ozone-treatment tail gas component detection unit includes a first ozone detection unit for detecting the content of ozone in the tail gas after the ozone treatment.
43. Example 43 of the present invention includes the features of Examples 41 or 42, wherein the post-ozone-treatment tail gas component detection unit includes a second nitrogen oxide detection unit configured to detect the nitrogen oxide content in the tail gas after the ozone treatment.
44. Example 44 of the present invention includes the features of any one of Examples 41 to 43, wherein the post-ozone-treatment tail gas component detection unit includes a second CO detection unit configured to detect the CO content in the tail gas after the ozone treatment.
45. Example 45 of the present invention includes the features of any one of Examples 41 to 44, wherein the post-ozone-treatment tail gas component detection unit includes a second volatile organic compound detection unit configured to detect the content of volatile organic compound in the tail gas after the ozone treatment.
46. Example 46 of the present invention includes the features of any one of Examples 42 to 45, wherein the control unit controls the amount of ozone according to an output value of at least one of the post-ozone-treatment tail gas component detection units.
47. Example 47 of the present invention includes the features of any one of Examples 1 to 46, wherein the tail gas ozone purification system further includes a denitration device configured to remove nitric acid in a product resulting from mixing and reacting the ozone stream with the tail gas stream.
48. Example 48 of the present invention includes the features of Example 47, wherein the denitration device includes an electrocoagulation device, and the electrocoagulation device includes:
   an electrocoagulation flow channel;
   a first electrode which is located in the electrocoagulation flow channel; and
   a second electrode.
49. Example 49 of the present invention includes the features of Example 48, wherein the first electrode is in one or a combination of more states of solid, liquid, a gas molecular group, a plasma, an electrically conductive substance in a mixed state, a natural mixed electrically conductive of organism, or an electrically conductive substance formed by manual processing of an object.
50. Example 50 of the present invention includes the features of Example 48 or 49, wherein the first electrode is solid metal, graphite, or 304 steel.
51. Example 51 of the present invention includes the features of any one of Examples 48 to 50, wherein the first electrode has a point shape, a linear shape, a net shape, a perforated plate shape, a plate shape, a needle rod shape, a ball cage shape, a box shape, a tubular shape, a natural shape of a substance, or a processed shape of a substance.
52. Example 52 of the present invention includes the features of any one of Examples 48 to 51, wherein the first electrode is provided with a front through hole.
53. Example 53 of the present invention includes the features of Example 52, wherein the front through hole has a polygonal shape, a circular shape, an oval shape, a square shape, a rectangular shape, a trapezoidal shape, or a diamond shape.
54. Example 54 of the present invention includes the features of Example 52 or 53, wherein the front through hole has a diameter of 0.1-3 mm.
55. Example 55 of the present invention includes the features of any one of Examples 48 to 54, wherein the second electrode has a multilayered net shape, a net shape, a perforated plate shape, a tubular shape, a barrel shape, a ball cage shape, a box shape, a plate shape, a particle-stacked layer shape, a bent plate shape, or a panel shape.
56. Example 56 of the present invention includes the features of any one of Examples 48 to 55, wherein the second electrode is provided with a rear through hole.
57. Example 57 of the present invention includes the features of Example 56, wherein the rear through hole has a polygonal shape, a circular shape, an oval shape, a square shape, a rectangular shape, a trapezoidal shape, or a diamond shape.
58. Example 58 of the present invention includes the features of Example 56 or 57, wherein the rear through hole has a diameter of 0.1-3 mm.
59. Example 59 of the present invention includes the features of any one of Examples 48 to 58, wherein the second electrode is made of an electrically conductive substance.
60. Example 60 of the present invention includes the features of any one of Examples 48 to 59, wherein the second electrode has an electrically conductive substance on a surface thereof.
61. Example 61 of the present invention includes the features of any one of Examples 48 to 60, wherein an electrocoagulation electric field is formed between the first electrode and the second electrode, and the electrocoagulation electric field is one or a combination of electric fields selected from a point-plane electric field, a line-plane electric field, a net-plane electric field, a point-barrel electric field, a line-barrel electric field, and a net-barrel electric field.
62. Example 62 of the present invention includes the features of any one of Examples 48 to 61, wherein the first electrode has a linear shape, and the second electrode has a planar shape.
63. Example 63 of the present invention includes the features of any one of Examples 48 to 62, wherein the first electrode is perpendicular to the second electrode.
64. Example 64 of the present invention includes the features of any one of Examples 48 to 63, wherein the first electrode is parallel to the second electrode.
65. Example 65 of the present invention includes the features of any one of Examples 48 to 64, wherein the first electrode has a curved shape or an arcuate shape.
66. Example 66 of the present invention includes the features of any one of Examples 48 to 65, wherein the first electrode and the second electrode both have a planar shape, and the first electrode is parallel to the second electrode.
67. Example 67 of the present invention includes the features of any one of Examples 48 to 66, wherein the first electrode uses a wire mesh.
68. Example 68 of the present invention includes the features of any one of Examples 48 to 67, wherein the first electrode has a flat surface shape or a spherical surface shape.
69. Example 69 of the present invention includes the features of any one of Examples 48 to 68, wherein the second electrode has a curved surface shape or a spherical surface shape.
70. Example 70 of the present invention includes the features of any one of Examples 48 to 69, wherein the first electrode has a point shape, a linear shape, or a net shape, the second electrode has a barrel shape, the first electrode is located inside the second electrode, and the first electrode is located on a central axis of symmetry of the second electrode.
71. Example 71 of the present invention includes the features of any one of Examples 48 to 70, wherein the first electrode is electrically connected with one electrode of a power supply, and the second electrode is electrically connected with the other electrode of the power supply.
72. Example 72 of the present invention includes the features of any one of Examples 48 to 71, wherein the first electrode is electrically connected with a cathode of the power supply, and the second electrode is electrically connected with an anode of the power supply.
73. Example 73 of the present invention includes the features of Example 71 or 72, wherein the power supply has a voltage of 5-50 KV.
74. Example 74 of the present invention includes the features of any one of Examples 71 to 73, wherein the voltage of the power supply is lower than a corona inception voltage.
75. Example 75 of the present invention includes the features of any one of Examples 71 to 74, wherein the voltage of the power supply is 0.1 kv/mm-2 kv/mm.
76. Example 76 of the present invention includes the features of any one of Examples 71 to 75, wherein a voltage waveform of the power supply is a direct-current waveform, a sine waveform, or a modulated waveform.
77. Example 77 of the present invention includes the features of any one of Examples 71 to 76, wherein the power supply is an alternating power supply, and a range of variable frequency pulse of the power supply is 0.1 Hz-5 GHz.
78. Example 78 of the present invention includes the features of any one of Examples 48 to 77, wherein the first electrode and the second electrode both extend along a left-right direction, and a left end of the first electrode is located to the left of a left end of the second electrode.
79. Example 79 of the present invention includes the features of any one of Examples 48 to 78, wherein there are two second electrodes, and the first electrode is located between the two second electrodes.
80. Example 80 of the present invention includes the features of any one of Examples 48 to 79, wherein the distance between the first electrode and the second electrode is 5-50 mm.
81. Example 81 of the present invention includes the features of any one of Examples 48 to 80, wherein the first electrode and the second electrode constitute an adsorption unit, and there are a plurality of the adsorption units.
82. Example 82 of the present invention includes the features of Example 81, wherein all of the adsorption units are distributed along one or more of a left-right direction, a front-back direction, an oblique direction, or a spiral direction.
83. Example 83 of the present invention includes the features of any one of Examples 48 to 82 and further includes an electrocoagulation housing, wherein the electrocoagulation housing includes an electrocoagulation entrance, an electrocoagulation exit, and the electrocoagulation flow channel, and two ends of the electrocoagulation flow channel respectively communicate with the electrocoagulation entrance and the electrocoagulation exit.
84. Example 84 of the present invention includes the features of Example 83, wherein the electrocoagulation entrance has a circular shape, and the electrocoagulation entrance has a diameter of 300 mm-1000 mm or a diameter of 500 mm.
85. Example 85 of the present invention includes the features of Example 83 or 84, wherein the electrocoagulation exit has a circular shape, and the electrocoagulation exit has a diameter of 300 mm-1000 mm or a diameter of 500 mm.
86. Example 86 of the present invention includes the features of any one of Examples to 83 to 85, wherein the electrocoagulation housing includes a first housing portion, a second housing portion, and a third housing portion disposed in sequence in a direction from the electrocoagulation entrance to the electrocoagulation exit, the electrocoagulation entrance is located at one end of the first housing portion, and the electrocoagulation exit is located at one end of the third housing portion.
87. Example 87 of the present invention includes the features of Example 86, wherein the size of an outline of the first housing portion gradually increases in the direction from the electrocoagulation entrance to the electrocoagulation exit.
88. Example 88 of the present invention includes the features of Example 86 or 87, wherein the first housing portion has a straight tube shape.
89. Example 89 of the present invention includes the features of any one of Examples 86 to 88, wherein the second housing portion has a straight tube shape, and the first electrode and the second electrode are mounted in the second housing portion.
90. Example 90 of the present invention includes the features of any one of Examples 86 to 89, wherein the size of an outline of the third housing portion gradually decreases in the direction from the electrocoagulation entrance to the electrocoagulation exit.
91. Example 91 of the present invention includes the features of any one of Examples 86 to 90, wherein cross sections of the first housing portion, the second housing portion, and the third housing portions are all rectangular.
92. Example 92 of the present invention includes the features of any one of Examples 83 to 91, wherein the electrocoagulation housing is made of stainless steel, an aluminum alloy, an iron alloy, cloth, a sponge, a molecular sieve, activated carbon, foamed iron, or foamed silicon carbide.
93. Example 93 of the present invention includes the features of any one of Examples 48 to 92, wherein the first electrode is connected to the electrocoagulation housing through an electrocoagulation insulating part.
94. Example 94 of the present invention includes the features of Example 93, wherein the electrocoagulation insulating part is made of insulating mica.
95. Example 95 of the present invention includes the features of Example 93 or 94, wherein the electrocoagulation insulating part has a columnar shape or a tower-like shape.
96. Example 96 of the present invention includes the features of any one of Examples 48 to 95, wherein the first electrode is provided with a front connecting portion having a cylindrical shape, and the front connecting portion is fixedly connected with the electrocoagulation insulating part.
97. Example 97 of the present invention includes the features of any one of Examples 48 to 96, wherein the second electrode is provided with a rear connecting portion having a cylindrical shape, and the rear connecting portion is fixedly connected with the electrocoagulation insulating part.
98. Example 98 of the present invention includes the features of any one of Examples 48 to 97, wherein the ratio of the cross-sectional area of the first electrode to the cross-sectional area of the electrocoagulation flow channel is 99%-10%, 90-10%, 80-20%, 70-30%, 60-40%, or 50%.
99. Example 99 of the present invention includes the features of any one of Examples 47 to 98, wherein the denitration device includes a condensing unit configured to condense the tail gas which has undergone the ozone treatment, thereby realizing gas-liquid separation.
100. Example 100 of the present invention includes the features of any one of Examples 47 to 99, wherein the denitration device includes a leaching unit configured to leach the tail gas which has undergone the ozone treatment.
101. Example 101 of the present invention includes the features of Example 100, wherein the denitration device further includes a leacheate unit configured to provide leacheate to the leaching unit.
102. Example 102 of the present invention includes the features of Example 101, wherein the leacheate in the leacheate unit includes water and/or an alkali.
103. Example 103of the present invention includes the features of any one of Examples 47 to 102, wherein the denitration device further includes a denitration liquid collecting unit configured to store an aqueous nitric acid solution and/or an aqueous nitrate solution removed from the tail gas.
104. Example 104 of the present invention includes the features of Example 103, wherein the denitration liquid collecting unit stores the aqueous nitric acid solution, and the denitration liquid collecting unit is provided with an alkaline solution adding unit which is used to form nitric acid with a nitrate.
105. Example 105 of the present invention includes the features of any one of Examples 1 to 104, wherein the tail gas ozone purification system further includes an ozone digester configured to digest ozone in the tail gas which has undergone treatment in the reaction field.
106. Example 106 of the present invention includes the features of Example 105, wherein the ozone digester is at least one type of digester selected from an ultraviolet ozone digester and a catalytic ozone digester.
107. Example 107 of the present invention includes the features of any one of Examples 1 to 106, wherein the tail gas ozone purification system further includes a first denitration device configured to remove nitrogen oxides in the tail gas, and the reaction field is configured to mix and react the tail gas which has been treated by the first denitration device with the ozone stream or to mix and react the tail gas, before being treated by the first denitration device, with the ozone stream.
108. Example 108 of the present invention includes the features of Example 107, wherein the first denitration device is at least one device selected from a non-catalytic reduction device, a selective catalytic reduction device, a non-selective catalytic reduction device, and an electron beam denitration device.
109. Example 109 of the present invention includes the features of any one of Examples 1 to 108 and further includes an engine.
110. Example 110 of the present invention provides a tail gas ozone purification method including a step of mixing and reacting an ozone stream with a tail gas stream.
111. Example 111 of the present invention includes the features of the tail gas ozone purification method of Example 110, wherein the tail gas stream includes nitrogen oxides and volatile organic compounds.
112. Example 112 of the present invention includes the features of the tail gas ozone purification method of Example 110 or 111, wherein the ozone stream is mixed and reacted with the tail gas stream in a low-temperature section of the tail gas.
113. Example 113 of the present invention includes the features of the tail gas ozone purification method of any one of Examples 110 to 112, wherein the ozone stream is mixed and reacted with the tail gas stream at a temperature of -50-200 °C.
114. Example 114 of the present invention includes the features of the tail gas ozone purification method of Example 113, wherein the ozone stream is mixed and reacted with the tail gas stream at a temperature of 60-70 °C.
115. Example 115 of the present invention includes the features of the tail gas ozone purification method of any one of Examples 110 to 114, wherein a mixing mode of the ozone stream with the tail gas stream is at least one mixing mode selected from venturi mixing, positive pressure mixing, insertion mixing, dynamic mixing, and fluid mixing.
116. Example 116 of the present invention includes the features of the tail gas ozone purification method of Example 115, wherein when the mixing mode of the ozone stream with the tail gas stream is positive pressure mixing, the pressure of an ozone intake is greater than the pressure of the tail gas.
117. Example 117 of the present invention includes the features of the tail gas ozone purification method of Example 110, wherein before the ozone stream is mixed and reacted with the tail gas stream, the flow velocity of the tail gas stream is increased, and the ozone stream is mixed in using the venturi principle.
118. Example 118 of the present invention includes the features of the tail gas ozone purification method of Example 110, wherein the mixing mode of the ozone stream with the tail gas stream is at least one mode selected from countercurrent introduction at a tail gas outlet, mixing in a front section of a reaction field, insertion before and after a deduster, mixing before and after a denitration device, mixing before and after a catalytic device, introduction before and after a water washing device, mixing before and after a filtering device, mixing before and after a silencing device, mixing in a tail gas pipeline, mixing outside of an adsorption device, and mixing before and after a condensation device.
119. Example 119 of the present invention includes the features of the tail gas ozone purification method of Example 110, wherein a reaction field for mixing and reacting the ozone stream with the tail gas stream includes a pipeline and/or a reactor.
120. Example 120 of the present invention includes the features of the tail gas ozone purification method of any one of Examples 110 to 119, wherein the reaction field includes an exhaust pipe, a heat retainer device, or a catalytic converter.
121. Example 121 of the present invention includes the features of the tail gas ozone purification method of Example 120 and further includes at least one of the following technical features:
   1) a pipe-segment diameter of the pipeline is 100-200 mm;
   2) the length of the pipeline is greater than 0.1 times the pipe diameter;
   3) the reactor is at least one type of reactor selected from the following:
      a first reactor: The first reactor has a reaction chamber in which the tail gas is mixed and reacted with the ozone;
      a second reactor: The second reactor includes a plurality of honeycomb-shaped cavities configured to provide spaces for mixing and reacting the tail gas with the ozone, wherein the honeycomb-shaped cavities are provided with gaps therebetween which are configured to introduce a cold medium and control a reaction temperature of the tail gas with the ozone.
      a third reactor: the reactor includes a plurality of carrier units which provide reaction sites; and
      a fourth reactor: The fourth reactor includes a catalyst unit which is configured to promote oxidization reaction of the tail gas.
   4) the reaction field is provided with an ozone entrance which is at least one selected from a spout, a spray grid, a nozzle, a swirl nozzle, and a spout provided with a venturi tube; and
   5) the reaction field is provided with an ozone entrance through which the ozone enters the reaction field to contact the tail gas, and the ozone entrance is provided in at least one of the following directions: a direction opposite to a flow direction of the tail gas, a direction perpendicular to the flow direction of the tail gas, a direction tangent to the flow direction of the tail gas, a direction inserted in the flow direction of the tail gas, and multiple directions.
122. Example 122 of the present invention includes the features of the tail gas ozone purification method of any one of Examples 110 to 121, wherein the ozone stream is provided by an ozone storage unit and/or an ozone generator.
123. Example 123 of the present invention includes the features of the tail gas ozone purification method of Example 122, wherein the ozone generator includes one or a combination of generators selected from an extended-surface discharge ozone generator, a power frequency arc ozone generator, a high-frequency induction ozone generator, a low-pressure ozone generator, an ultraviolet ozone generator, an electrolyte ozone generator, a chemical agent ozone generator, and a ray irradiation particle generator.
124. Example 124 of the present invention includes the features of the tail gas ozone purification method of Example 122, wherein the ozone stream is provided by the following method: generating ozone from an oxygen-containing gas under the effect of an electric field and an oxidation catalytic bond cracking selective catalyst, wherein the oxidation catalytic bond cracking selective catalyst is loaded on an electrode forming the electric field.
125. Example 125 of the present invention includes the features of the tail gas ozone purification method of Example 124, wherein the electrode includes a high-voltage electrode or an electrode provided with a barrier dielectric layer. When the electrode includes a high-voltage electrode, the oxidation catalytic bond cracking selective catalyst is loaded on a surface of the high-voltage electrode, and when the electrode includes a high-voltage electrode provided with a barrier dielectric layer, the oxidation catalytic bond cracking selective catalyst is loaded on a surface of the barrier dielectric layer.
126. Example 126 of the present invention includes the features of the tail gas ozone purification method of Example 124, wherein when the electrode includes a high-voltage electrode, the oxidation catalytic bond cracking selective catalyst has a thickness of 1-3mm, and when the electrode includes a high-voltage electrode having a barrier dielectric layer, the load capability of the oxidation catalytic bond cracking selective catalyst is 1-10 wt% of the barrier dielectric layer.
127. Example 127 of the present invention includes the features of the tail gas ozone purification method of any one of Examples 124 to 126, wherein the oxidation catalytic bond cracking selective catalyst includes the following components in percentages by weight:
   5-15% of an active component; and
   85-95% of a coating layer,
   wherein, the active component is at least one material selected from compounds of a metal M and a metallic element M, and the metallic element M is at least one element selected from the group consisting of an alkaline earth metal element, a transition metal element, a fourth main group metal element, a noble metal element and a lanthanoid rare earth element;
   the coating layer is at least one material selected from the group consisting of aluminum oxide, cerium oxide, zirconium oxide, manganese oxide, metal composite oxide, a porous material, and a layered material, and the metal composite oxide includes a composite oxide of one or more metals selected from aluminum, cerium, zirconium, and manganese.
128. Example 128 of the present invention includes the features of the tail gas ozone purification method of Example 127, wherein the alkaline earth metal element is at least one element selected from the group consisting of magnesium, strontium, and calcium.
129. Example 129 of the present invention includes the features of the tail gas ozone purification method of Example 127, wherein the transition metal element is at least one element selected from the group consisting of titanium, manganese, zinc, copper, iron, nickel, cobalt, yttrium, and zirconium.
130. Example 130 of the present invention includes the features of the tail gas ozone purification method of Example 127, wherein the fourth main group metal element is tin.
131. Example 131 of the present invention includes the features of the tail gas ozone purification method of Example 127, wherein the noble metal element is at least one element selected from the group consisting of platinum, rhodium, palladium, gold, silver, and iridium.
132. Example 132 of the present invention includes the features of the tail gas ozone purification method of Example 127, wherein the lanthanoid rare earth element is at least one element selected from the group consisting of lanthanum, cerium, praseodymium, and samarium.
133. Example 133 of the present invention includes the features of the tail gas ozone purification method of Example 127, wherein the compound of the metallic element M is at least one compound selected from the group consisting of oxides, sulfides, sulfates, phosphates, carbonates, and perovskites.
134. Example 134 of the present invention includes the features of the tail gas ozone purification method of Example 127, wherein the porous material is at least one material selected from the group consisting of a molecular sieve, diatomaceous earth, zeolite, and a carbon nanotube.
135. Example 135 of the present invention includes the features of the tail gas ozone purification method of Example 127, wherein the layered material is at least one material selected from the group consisting of graphene and graphite.
136. Example 136 of the present invention includes the features of the tail gas ozone purification method of any one of Examples 124 to 126, wherein the electrode is loaded with a selective catalyst for cleavage of oxygen double catalytic bond by dipping and/or spraying.
137. Example 137 of the present invention includes the features of the tail gas ozone purification method of Example 136 and further includes the following steps:
   1) loading, according to the ratio of components of the catalyst, a slurry of raw materials of the coating layer on a surface of the high-voltage electrode or a surface of the barrier dielectric layer, followed by drying and calcination to obtain the high-voltage electrode or the barrier dielectric layer loaded with the coating layer; and
   2) loading, according to the ratio of compositions of the catalyst, a raw solution or slurry containing the metallic element M on the coating layer obtained in step 1), followed by drying and calcination, when the coating layer is loaded on the surface of the barrier dielectric layer, after the calcination, providing the high-voltage electrode on another surface of the barrier dielectric layer opposite to the surface loaded with the coating layer, to obtain the ozone generator electrode; or according to the ratio of compositions of the catalyst, loading a raw solution or slurry containing the metallic element M on the coating layer obtained in step 1), followed by drying, calcination and post-treatment, when the coating layer is loaded on the surface of the barrier dielectric layer, after the post-treatment, providing the high-voltage electrode on another surface of the barrier dielectric layer opposite to the surface loaded with the coating layer, to obtain the ozone generator electrode,
   wherein control over the form of active components in the electrode catalyst is realized by adjusting a calcination temperature and ambient conditions and through the post-treatment.
138. Example 138 of the present invention includes the features of the tail gas ozone purification method of Example 136 and further includes the following steps:
   1) loading, according to the ratio of components of the catalyst, a raw solution or slurry containing the metallic element M on raw materials of the coating layer, followed by drying and calcination to obtain the coating layer material loaded with the active components; and
   2) preparing, according to the ratio of components of the catalyst, the coating layer material loaded with the active components obtained in step 1) into a slurry, loading the slurry on the surface of the high-voltage electrode or a surface of the barrier dielectric layer, followed by drying and calcination, when the coating layer is loaded on the surface of the barrier dielectric layer, after the calcination, providing the high-voltage electrode on another surface of the barrier dielectric layer opposite to the surface loaded with the coating layer to obtain the ozone generator electrode; or according to the ratio of components of the catalyst, preparing the coating layer material loaded with the active components obtained in step 1) into a slurry, loading the slurry on the surface of the high-voltage electrode or the surface of the barrier dielectric layer, followed by drying, calcination and post-treatment, when the coating layer is loaded on the surface of the barrier dielectric layer, after the post-treatment, providing the high-voltage electrode on another surface of the barrier dielectric layer opposite to the surface loaded with the coating layer to obtain the ozone generator electrode,
   wherein control over the form of active components in the electrode catalyst is realized by adjusting a calcination temperature and ambient conditions, and through the post-treatment.
139. Example 139 of the present invention includes the features of the tail gas ozone purification method of any one of Examples 110 to 138 and further includes controlling the amount of ozone in the ozone stream so as to effectively oxidize gas components to be treated in tail gas.
140. Example 140 of the present invention includes the features of the tail gas ozone purification method of any one of Examples 110 to 139, wherein the amount of ozone in the ozone stream is controlled to achieve the following removal efficiency:
   removal efficiency of nitrogen oxides: 60-99.97%;
   removal efficiency of CO: 1-50%; and
   removal efficiency of volatile organic compounds: 60-99.97%.
141. Example 141 of the present invention includes the features of the tail gas ozone purification method of Example 139 or 140 and further includes detecting contents of components in the tail gas before the ozone treatment.
142. Example 142 of the present invention includes the features of the tail gas ozone purification method of any one of Examples 139 to 141, wherein the amount of ozone required in the mixing and reaction is controlled according to the contents of components in the tail gas before the ozone treatment.
143. Example 143 of the present invention includes the features of the tail gas ozone purification method of Example 141 or 142, wherein detecting the contents of components in the tail gas before the ozone treatment is performed by at least one method selected from:
   detecting the content of volatile organic compounds in the tail gas before the ozone treatment;
   detecting the CO content in the tail gas before the ozone treatment; and
   detecting the nitrogen oxide content in the tail gas before the ozone treatment.
144. Example 144 of the present invention includes the features of the tail gas ozone purification method of Example 143, wherein the amount of ozone required in the mixing and reaction is controlled according to an output value of at least one of the contents of components in the tail gas before the ozone treatment.
145. Example 145 of the present invention includes the features of the tail gas ozone purification method of any one of Examples 139 to 144, wherein the amount of ozone required in the mixing and reaction is controlled according to a preset mathematical model.
146. Example 146 of the present invention includes the features of the tail gas ozone purification method of any one of Examples 139 to 145, wherein the amount of ozone required in the mixing and reaction is controlled according to a theoretically estimated value.
147. Example 147 of the present invention includes the features of the tail gas ozone purification method of Example 146, wherein the theoretically estimated value is a molar ratio of an ozone introduction amount to a substance to be treated in the tail gas, which is 2-10.
148. Example 148 of the present invention includes the features of the tail gas ozone purification method of any one of Examples 139 to 147 and further includes detecting the contents of components in the tail gas after the ozone treatment.
149. Example 149 of the present invention includes the features of the tail gas ozone purification method of any one of Examples 139 to 148, wherein the amount of ozone required in the mixing and reaction is controlled according to the contents of components in the tail gas after the ozone treatment.
150. Example 150 of the present invention includes the features of the tail gas ozone purification method of Example 148 or 149, wherein detecting the contents of components in the tail gas after the ozone treatment is performed by at least one method selected from:
   detecting the ozone content in the tail gas after the ozone treatment;
   detecting the content of volatile organic compounds in the tail gas after the ozone treatment; detecting the CO content in the tail gas after the ozone treatment; and
   detecting the nitrogen oxide content in the tail gas after the ozone treatment.
151. Example 151 of the present invention includes the features of the tail gas ozone purification method of Example 150, wherein the amount of ozone is controlled according to the output value of at least one of the detected contents of components in the tail gas after the ozone treatment.
152. Example 152 of the present invention includes the features of the tail gas ozone purification method of any one of Examples 110 to 151, wherein the tail gas ozone purification method further includes a step of removing nitric acid in a product resulting from mixing and reacting the ozone stream with the tail gas stream.
153. Example 153 of the present invention : the tail gas ozone purification method comprising Example 152, wherein a gas carrying nitric acid mist is enabled to flow through the first electrode; when the gas carrying nitric acid mist flows through the first electrode, the first electrode enables the nitric acid mist in the gas to be charged, and the second electrode applies an attractive force to the charged nitric acid mist such that the nitric acid mist moves towards the second electrode until the nitric acid mist is attached to the second electrode.
154. Example 154 of the present invention includes the features of the tail gas ozone purification method of Example 153, wherein the first electrode directs electrons into the nitric acid mist, and the electrons are transferred among mist drops located between the first electrode and the second electrode to enable more mist drops to be charged.
155. Example 155 of the present invention includes the features of the tail gas ozone purification method of Example 153 or 154, wherein electrons are conducted between the first electrode and the second electrode through the nitric acid mist and form a current.
156. Example 156 of the present invention includes the features of the tail gas ozone purification method of any one of Examples 153-155, wherein the first electrode enables the nitric acid mist to be charged by contacting the nitric acid mist.
157. Example 157 of the present invention includes the features of the tail gas ozone purification method of any one of Examples 153-156, wherein the first electrode enables the nitric acid mist to be charged by energy fluctuation.
158. Example 158 of the present invention includes the features of the tail gas ozone purification method of any one of Examples 153-157, wherein the nitric acid mist attached to the second electrode forms water drops, and the water drops on the second electrode flow into a collecting tank.
159. Example 159 of the present invention includes the features of the tail gas ozone purification method of Example 158, wherein the water drops on the second electrode flow into the collecting tank under the effect of gravity.
160. Example 160 of the present invention includes the features of the tail gas ozone purification method of Example 158 or 159, wherein when flowing, the gas will blow the water drops to flow into the collecting tank.
161. Example 161 of the present invention includes the features of the tail gas ozone purification method of Example 153-160, wherein the first electrode is in one or a combination of more states of solid, liquid, a gas molecular group, a plasma, an electrically conductive substance in a mixed state, a natural mixed electrically conductive of organism, or an electrically conductive substance formed by manual processing of an object.
162. Example 162 of the present invention includes the features of the tail gas ozone purification method of any one of Examples 153-161, wherein the first electrode is solid metal, graphite, or 304 steel.
163. Example 163 of the present invention includes the features of the tail gas ozone purification method of any one of Examples 153 to 162, wherein the first electrode has a point shape, a linear shape, a net shape, a perforated plate shape, a plate shape, a needle rod shape, a ball cage shape, a box shape, a tubular shape, a natural shape of a substance, or a processed shape of a substance.
164. Example 164 of the present invention includes the features of the tail gas ozone purification method of any one of Examples 153-163, wherein the first electrode is provided with a front through hole.
165. Example 165 of the present invention includes the features of the tail gas ozone purification method of Example 164, wherein the front through hole has a polygonal shape, a circular shape, an oval shape, a square shape, a rectangular shape, a trapezoidal shape, or a diamond shape.
166. Example 166 of the present invention includes the features of the tail gas ozone purification method of Example 164 or 165, wherein the front through hole has a diameter of 0.1-3 mm.
167. Example 167 of the present invention includes the features of the tail gas ozone purification method of any one of Examples 153 to 166, wherein the second electrode has a multilayered net shape, a net shape, a perforated plate shape, a tubular shape, a barrel shape, a ball cage shape, a box shape, a plate shape, a particle-stacked layer shape, a bent plate shape, or a panel shape.
168. Example 168 of the present invention includes the features of the tail gas ozone purification method of any one of Examples 153 to 167, wherein the second electrode is provided with a rear through hole.
169. Example 169 of the present invention includes the features of the tail gas ozone purification method of Example 168, wherein the rear through hole has a polygonal shape, a circular shape, an oval shape, a square shape, a rectangular shape, a trapezoidal shape, or a diamond shape.
170. Example 170 of the present invention includes the features of the tail gas ozone purification method of Example 168 or 169, wherein the rear through hole has a diameter of 0.1-3 mm.
171. Example 171 of the present invention includes the features of the tail gas ozone purification method of any one of Examples 153 to 170, wherein the second electrode is made of an electrically conductive substance.
172. Example 172 of the present invention includes the features of the tail gas ozone purification method of any one of Examples 153 to 171, wherein the second electrode has an electrically conductive substance on a surface thereof.
173. Example 173 of the present invention includes the features of the tail gas ozone purification method of any one of Examples 153 to 172, wherein an electrocoagulation electric field is formed between the first electrode and the second electrode, and the electrocoagulation electric field is one or a combination of electric fields selected from a point-plane electric field, a line-plane electric field, a net-plane electric field, a point-barrel electric field, a line-barrel electric field, and a net-barrel electric field.
174. Example 174 of the present invention includes the features of the tail gas ozone purification method of any one of Examples 153 to 173, wherein the first electrode has a linear shape, and the second electrode has a planar shape.
175. Example 175 of the present invention includes the features of the tail gas ozone purification method of any one of Examples 153 to 174, wherein the first electrode is perpendicular to the second electrode.
176. Example 176 of the present invention includes the features of the tail gas ozone purification method of any one of Examples 153 to 175, wherein the first electrode is parallel to the second electrode.
177. Example 177 of the present invention includes the features of the tail gas ozone purification method of any one of Examples 153 to 176, wherein the first electrode has a curved shape or an arcuate shape.
178. Example 178 of the present invention includes the features of the tail gas ozone purification method of any one of Examples 153 to 177, wherein the first electrode and the second electrode both have a planar shape, and the first electrode is parallel to the second electrode.
179. Example 179 of the present invention includes the features of the tail gas ozone purification method of any one of Examples 153 to 178, wherein the first electrode uses a wire mesh.
180. Example 180 of the present invention includes the features of the tail gas ozone purification method of any one of Examples 153 to 179, wherein the first electrode has a flat surface shape or a spherical surface shape.
181. Example 181 of the present invention includes the features of the tail gas ozone purification method of any one of Examples 153 to 180, wherein the second electrode has a curved surface shape or a spherical surface shape.
182. Example 182 of the present invention includes the features of the tail gas ozone purification method of any one of Examples 153 to 181, wherein the first electrode has a point shape, a linear shape, or a net shape, the second electrode has a barrel shape, the first electrode is located inside the second electrode, and the first electrode is located on a central axis of symmetry of the second electrode.
183. Example 183 of the present invention includes the features of any one of Examples 153 to 182, wherein the first electrode is electrically connected with one electrode of a power supply, and the second electrode is electrically connected with the other electrode of the power supply.
184. Example 184 of the present invention includes the features of the tail gas ozone purification method of any one of Examples 153 to 183, wherein the first electrode is electrically connected with a cathode of the power supply, and the second electrode is electrically connected with an anode of the power supply.
185. Example 185 of the present invention includes the features of the tail gas ozone purification method of Example 183 or 184, wherein the power supply has a voltage of 5-50 KV.
186. Example 186 of the present invention includes the features of the tail gas ozone purification method of any one of Examples 183 to 185, wherein the voltage of the power supply is lower than a corona inception voltage.
187. Example 187 of the present invention includes the features of the tail gas ozone purification method of any one of Examples 183 to 186, wherein the voltage of the power supply is 0.1 kv/mm-2 kv/mm.
188. Example 188 of the present invention includes the features of the tail gas ozone purification method of any one of Examples 183 to 187, wherein a voltage waveform of the power supply is a direct-current waveform, a sine waveform, or a modulated waveform.
189. Example 189 of the present invention includes the features of the tail gas ozone purification method of any one of Examples 183 to 188, wherein the power supply is an alternating power supply, and the range of a variable frequency pulse of the power supply is 0.1 Hz-5 GHz.
190. Example 190 of the present invention includes the features of the tail gas ozone purification method of any one of Examples 153 to 189, wherein the first electrode and the second electrode both extend along a left-right direction, and a left end of the first electrode is located to the left of a left end of the second electrode.
191. Example 191 of the present invention includes the features of the tail gas ozone purification method of any one of Examples 153 to 190, wherein there are two second electrodes, and the first electrode is located between the two second electrodes.
192. Example 192 of the present invention includes the features of the tail gas ozone purification method of any one of Examples 153 to 191, wherein the distance between the first electrode and the second electrode is 5-50 mm.
193. Example 193 of the present invention includes the features of any one of Examples 153 to 192, wherein the first electrode and the second electrode constitute an adsorption unit, and there are a plurality of the adsorption units.
194. Example 194 of the present invention includes the features of the tail gas ozone purification method of Example 193, wherein all of the adsorption units are distributed in one or more of a left-right direction, a front-back direction, an oblique direction, and a spiral direction.
195. Example 195 of the present invention includes the features of the tail gas ozone purification method of any one of Examples 153 to 194, wherein the first electrode is mounted in an electrocoagulation housing, and the electrocoagulation housing has an electrocoagulation entrance and an electrocoagulation exit.
196. Example 196 of the present invention includes the features of the tail gas ozone purification method of Example 195, wherein the electrocoagulation entrance has a circular shape, and the electrocoagulation entrance has a diameter of 300 mm-1000 mm or a diameter of 500 mm.
197. Example 197 of the present invention includes the features of the tail gas ozone purification method of Example 195 or 196, wherein the electrocoagulation exit has a circular shape, and the electrocoagulation exit has a diameter of 300 mm1000mm or a diameter of 500 mm.
198. Example 198 of the present invention includes the features of the tail gas ozone purification method of any one of Examples to 195 to 197, wherein the electrocoagulation housing includes a first housing portion, a second housing portion, and a third housing portion disposed in sequence in a direction from the electrocoagulation entrance to the electrocoagulation exit, the electrocoagulation entrance is located at one end of the first housing portion, and the electrocoagulation exit is located at one end of the third housing portion.
199. Example 199 of the present invention includes the features of the tail gas ozone purification method of Example 198, wherein the size of an outline of the first housing portion gradually increases in the direction from the electrocoagulation entrance to the electrocoagulation exit.
200. Example 200 of the present invention includes the features of the tail gas ozone purification method of Example 198 or 199, wherein the first housing portion has a straight tube shape.
201. Example 201 of the present invention includes the features of the tail gas ozone purification method of any one of Examples 198 to 200, wherein the second housing portion has a straight tube shape, and the first electrode and the second electrode are mounted in the second housing portion.
202. Example 202 of the present invention includes the features of the tail gas ozone purification method of any one of Examples 198 to 201, wherein the size of an outline of the third housing portion gradually decreases in the direction from the electrocoagulation entrance to the electrocoagulation exit.
203. Example 203 of the present invention includes the features of the tail gas ozone purification method of any one of Examples 198 to 202, wherein cross sections of the first housing portion, the second housing portion, and the third housing portions are all rectangular.
204. Example 204 of the present invention includes the features of the tail gas ozone purification method of any one of Examples 195 to 203, wherein the electrocoagulation housing is made of stainless steel, an aluminum alloy, an iron alloy, cloth, a sponge, a molecular sieve, activated carbon, foamed iron, or foamed silicon carbide.
205. Example 205 of the present invention includes the features of the tail gas ozone purification method of any one of Examples 153 to 204, wherein the first electrode is connected to the electrocoagulation housing through an electrocoagulation insulating part.
206. Example 206 of the present invention includes the features of the tail gas ozone purification method of Example 205, wherein the electrocoagulation insulating part is made of insulating mica.
207. Example 207 of the present invention includes the features of the tail gas ozone purification method of Example 205 or 206, wherein the electrocoagulation insulating part has a columnar shape or a tower-like shape.
208. Example 208 of the present invention includes the features of the tail gas ozone purification method of any one of Examples 153 to 207, wherein the first electrode is provided with a front connecting portion having a cylindrical shape, and the front connecting portion is fixedly connected with the electrocoagulation insulating part.
209. Example 209 of the present invention includes the features of the tail gas ozone purification method of any one of Examples 153 to 208, wherein the second electrode is provided with a rear connecting portion having a cylindrical shape, and the rear connecting portion is fixedly connected with the electrocoagulation insulating part.
210. Example 210 of the present invention includes the features of the tail gas ozone purification method of any one of Examples 153 to 209, wherein the first electrode is located in the electrocoagulation flow channel, the gas carrying nitric acid mist flows along the electrocoagulation flow channel and flows through the first electrode, and the ratio of the cross-sectional area of the first electrode to the cross-sectional area of the electrocoagulation flow channel is 99%-10%, 90-10%, 80-20%, 70-30%, 60-40%, or 50%.
211. Example 211 of the present invention includes the features of the tail gas ozone purification method of any one of Examples 152 to 210, wherein a method for removing the nitric acid in the product resulting from mixing and reacting the ozone stream with the tail gas stream comprises condensing the product resulting from mixing and reacting the ozone stream with the tail gas stream.
212. Example 212 of the present invention includes the features of the tail gas ozone purification method of any one of Examples 152 to 211, wherein the method for removing the nitric acid in the product resulting from mixing and reacting the ozone stream with the tail gas stream comprises leaching the product resulting from mixing and reacting the ozone stream with the tail gas stream.
213. Example 213 of the present invention includes the features of the tail gas ozone purification method of Example 212, wherein the method for removing the nitric acid in the product resulting from mixing and reacting the ozone stream with the tail gas stream further includes supplying leacheate to the product resulting from mixing and reacting the ozone stream with the tail gas stream.
214. Example 214 of the present invention includes the features of the tail gas ozone purification method of Example 213, wherein the leacheate is water and/or an alkali.
215. Example 215 of the present invention includes the features of the tail gas ozone purification method of any one of Examples 152 to 214, wherein the method for removing the nitric acid in the product resulting from mixing and reacting the ozone stream with the tail gas stream further includes storing an aqueous nitric acid solution and/or an aqueous nitrate solution removed from the tail gas.
216. Example 216 of the present invention includes the features of the tail gas ozone purification method of Example 215, wherein when the aqueous nitric acid solution is stored, an alkaline solution is added to form a nitrate with nitric acid.
217. Example 217 of the present invention includes the features of the tail gas ozone purification method of any one of Examples 110 to 216, wherein the tail gas ozone purification method further includes a step of performing ozone digestion on the tail gas from which the nitric acid was removed.
218. Example 218 of the present invention includes the features of the tail gas ozone purification method of Example 217, wherein the ozone digestion is at least one type of digestion selected from ultraviolet digestion and catalytic digestion.
219. Example 219 of the present invention includes the features of the tail gas ozone purification method of any one of Examples 110 to 218, wherein the tail gas ozone purification method further includes the following steps: removing nitrogen oxides in the tail gas a first time; and mixing and reacting the tail gas stream from which the nitrogen oxides were removed the first time with the ozone stream, or mixing and reacting the tail gas stream with the ozone stream before removing the nitrogen oxides in the tail gas the first time.
220. Example 220 of the present invention includes the features of the tail gas ozone purification method of Example 219, wherein removing the nitrogen oxides in the tail gas the first time is at least one method selected from a non-catalytic reduction method, a selective catalytic reduction method, a non-selective catalytic reduction method, and an electron beam denitration method.

### Brief Description of the Drawings

FIG. 1 is a schematic diagram of an engine tail gas ozone purification system.
FIG. 2 is a first schematic diagram of an ozone generator electrode in the present invention.
FIG. 3 is a second schematic diagram of the ozone generator electrode in the present invention.
FIG. 4 is a structural schematic diagram of a discharge-type ozone generator in the prior art.
FIG. 5 is a schematic diagram of an engine tail gas ozone purification system in Embodiment 1 of the present invention.
FIG. 6 is a top view of a reaction field in the engine tail gas ozone purification system in Embodiment 1 of the present invention.
FIG. 7 is a schematic diagram of an ozone amount control device in the present invention.
FIG. 8 is a structural schematic diagram of the electrocoagulation device in Embodiment 9 of the present invention.
FIG. 9 is a left view of the electrocoagulation device in Embodiment 9 of the present invention.
FIG. 10 is a perspective view of the electrocoagulation device in Embodiment 9 of the present invention.
FIG. 11 is a structural schematic diagram of the electrocoagulation device in Embodiment 10 of the present invention.
FIG. 12 is a top view of the electrocoagulation device in Embodiment 10 of the present invention.
FIG. 13 is a structural schematic diagram of the electrocoagulation device in Embodiment 11 of the present invention.
FIG. 14 is a structural schematic diagram of the electrocoagulation device in Embodiment 12 of the present invention.
FIG. 15 is a structural schematic diagram of the electrocoagulation device in Embodiment 13 of the present invention.
FIG. 16 is a structural schematic diagram of the electrocoagulation device in Embodiment 14 of the present invention.
FIG. 17 is a structural schematic diagram of the electrocoagulation device in Embodiment 15 of the present invention.
FIG. 18 is a structural schematic diagram of the electrocoagulation device in Embodiment 16 of the present invention.
FIG. 19 is a structural schematic diagram of the electrocoagulation device in Embodiment 17 of the present invention.
FIG. 20 is a structural schematic diagram of the electrocoagulation device in Embodiment 18 of the present invention.
FIG. 21 is a structural schematic diagram of the electrocoagulation device in Embodiment 19 of the present invention.
FIG. 22 is a structural schematic diagram of the electrocoagulation device in Embodiment 20 of the present invention.
FIG. 23 is a structural schematic diagram of the electrocoagulation device in Embodiment 21 of the present invention.
FIG. 24 is a structural schematic diagram of the electrocoagulation device in Embodiment 22 of the present invention.

### Detailed Description of the Invention

The embodiments of the present invention are illustrated below with respect to specific embodiments. Those familiar with the art will be able to readily understand other advantages and effects of the present invention from the disclosure in the present specification.

It should be noted that structures, ratios, sizes, and the like shown in the drawings of the present specification are only used for cooperation with the disclosure of the specification so as to be understood and read by those familiar with the art, rather than being used to limit the conditions under which the present invention can be implemented. Thus, they have no substantive technical significance, and any structural modifications, changes of ratio relationships or size adjustment still fall within the scope that can be covered by the technical contents disclosed in the present invention without affecting the effects that can be produced by the present invention and the objects that can be achieved. Terms such as "upper", "lower", "left", "right", "middle" and "one (a, an)", and the like referred to in the present specification are merely for clarity of description rather than being intended to limit the implementable scope of the present invention, and changes or alterations of relative relationships thereof without substantial technical changes should also be considered as being within the implementable scope of the present invention.

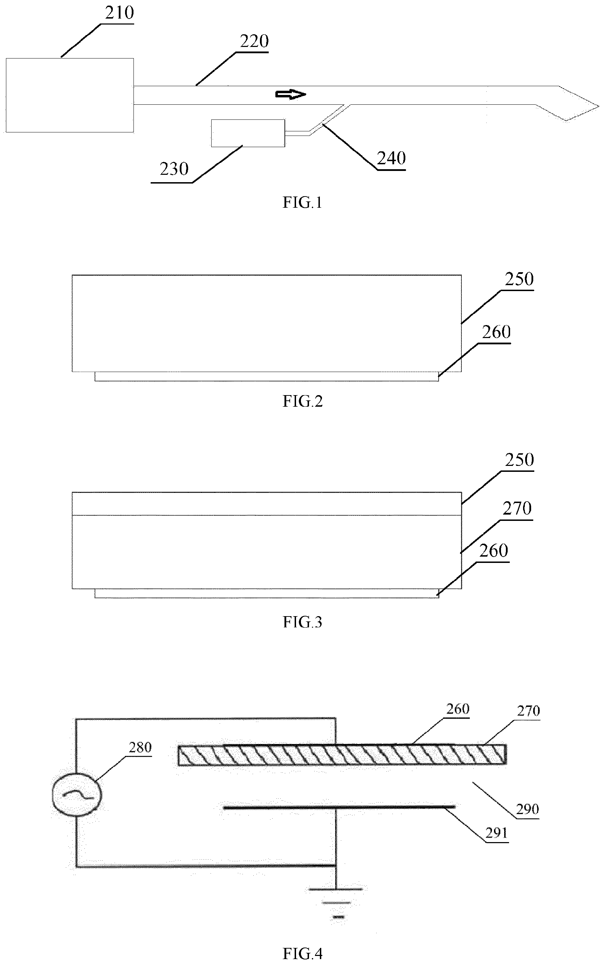

In an embodiment of the present invention, the engine tail gas ozone purification system includes a reaction field for mixing and reacting an ozone stream with a tail gas stream. For example, it is used to treat tail gas of an automobile engine 210, using the water in the tail gas and a tail gas pipe 220 to generate an oxidation reaction and oxidize organic volatiles in the tail gas to carbon dioxide and water. Sulfur, nitrates, and the like are collected in a harmless way. The tail gas ozone purification system may further include an external ozone generator 230 which provides ozone to the tail gas pipe 220 through an ozone delivery pipe 240. The arrow in FIG. 1 indicates the flow direction of tail gas.

The molar ratio of the ozone stream to the tail gas stream may be 2-10, such as 5-6, 5.5-6.5, 5-7, 4.5-7.5, 4-8, 3.5-8.5, 3-9, 2.5-9.5, or 2-10.

In an embodiment of the present invention, ozone can be obtained in a different manner. For example, ozone generation by means of extended-surface discharge is realized by tube-type or plate-type discharge components and an alternating high-voltage power supply. Air, from which dust is adsorbed by means of electrostatic adsorption, from which water is removed, and which is enriched with oxygen, enters a discharge channel. Oxygen in the air is ionized to generate ozone, high-energy ions, and high-energy particles, which are introduced into a reaction field such as a tail gas channel through a positive pressure or a negative pressure. A tube-type extended surface discharge structure is used, a cooling liquid is introduced inside the discharge tube and outside an outer discharge tube, an electrode is formed between the electrode inside the tube and a conductor of the outer tube, a 18 kHz and 10 kV high-voltage alternating current is introduced between the electrodes, high-energy ionization is generated on an inner wall of the outer tube and an outer wall surface of an inner tube, oxygen is ionized, and ozone is generated. Ozone is fed into the reaction field such as the tail gas channel using a positive pressure. When the molar ratio of the ozone stream to the tail gas stream is 2, the removal rate of VOCs is 50%. When the molar ratio of the ozone stream to the tail gas stream is 5, the removal rate of VOCs is more than 95%. The gas concentration of nitrogen oxides gas is then reduced, and the removal rate of nitrogen oxides is 90%. When the molar ratio of the ozone stream to the tail gas stream is greater than 10, the removal rate of VOCs is more than 99%. The gas concentration of nitrogen oxides is then reduced, and the removal rate of nitrogen oxides is 99%. The electricity consumption is increased to 30 w/g.

Generating the ozone using an ultraviolet lamp tube is performed as follows. Ultraviolet rays with a wavelength of 11-195 nanometers are generated by means of gas discharge. Air around a lamp tube is directly irradiated with the ultraviolet rays to generate ozone, high-energy ions, and high-energy particles which are introduced into the reaction field such as the tail gas channel through a positive pressure or a negative pressure. When an ultraviolet discharge tube with a 172 nm wavelength and a 185 nm wavelength is used, by illuminating the lamp tube, oxygen in the gas at the outer wall of the lamp tube is ionized to generate a large amount of oxygen ions, which are combined into ozone. The ozone is fed into the reaction field such as the tail gas channel through a positive pressure. When the molar ratio of the ozone stream obtained from 185 nm ultraviolet light to the tail gas stream is 2, the removal rate of VOCs is 40%. When the molar ratio of the ozone stream obtained from 185 nm ultraviolet light to the tail gas stream is 5, the removal rate of VOCs is more than 85%. The gas concentration of nitrogen oxides is then reduced, and the removal rate of nitrogen oxides is 70%. When the molar ratio of the ozone stream obtained from 185 nm ultraviolet light to the tail gas stream is greater than 10, the removal rate of VOCs is more than 95%. The gas concentration of nitrogen oxides is then reduced, and the removal rate of nitrogen oxides is 95%. The electricity consumption is increased to 25 w/g.

When the molar ratio of the ozone stream obtained from 172 nm ultraviolet light to the tail gas stream is 2, the removal rate of VOCs is 45%. When the molar ratio of the ozone stream obtained from 172 nm ultraviolet light to the tail gas stream is 5, the removal rate of VOCs is more than 89%, then the gas concentration of nitrogen oxides is reduced, and the removal rate of nitrogen oxides is 75%. When the molar ratio of the ozone stream obtained from 172 nm ultraviolet light to the tail gas stream is greater than 10, the removal rate of VOCs is more than 97%. The gas concentration of nitrogen oxides is then reduced, and the removal rate of nitrogen oxides is 95%.

The electricity consumption is 22 w/g.

In an embodiment of the present invention, the reaction field includes a pipeline.

In an embodiment of the present invention, the reaction field further includes at least one of the following technical features:
6) the diameter of the pipeline is 100-200 mm.
7) the length of the pipeline is greater than 0.1 times the diameter of the pipeline.
8) the reactor is at least one type of reactor selected from the following:
   a first reactor: The first reactor has a reaction chamber in which the tail gas is mixed and reacted with the ozone;
   a second reactor: The second reactor includes a plurality of honeycomb-shaped cavities configured to provide spaces for mixing and reacting the tail gas with the ozone, wherein the honeycomb-shaped cavities are provided with gaps therebetween which are configured to introduce a cold medium and control a reaction temperature of the tail gas with the ozone.
   a third reactor: The third reactor includes a plurality of carrier units which provide reaction sites (for example, a honeycomb-shaped mesoporous ceramic carrier), when there is no carrier unit, the reaction is in the gas phase, and when there is a carrier unit, the reaction is an interface reaction, which shortens the reaction time.
   a fourth reactor: The fourth reactor includes a catalyst unit which is configured to promote oxidization reaction of the tail gas.
9) the reaction field is provided with an ozone entrance, which is at least one selected from a spout, a spray grid, a nozzle, a swirl nozzle, and a spout provided with a venturi tube. For a spout provided with a venturi tube, the venturi tube is provided in the spout, and ozone is mixed by the venturi principle.
10) the reaction field is provided with an ozone entrance through which the ozone enters the reaction field to contact the tail gas. The ozone entrance is provided in at least one of the following directions: a direction opposite to the flow direction of the tail gas, a direction perpendicular to the flow direction of the tail gas, a direction tangent to the flow direction of the tail gas, a direction inserted in the flow direction of the tail gas, and multiple directions in order to overcome gravity. A direction opposite to the flow direction of the tail gas means entering in the opposite direction, thereby increasing the reaction time and reducing the volume. A direction perpendicular to the flow direction of the tail gas means using the venturi effect. A direction tangent to the flow direction of the tail gas facilitates mixing. A direction inserted in the flow direction of the tail gas overcomes vortices. In addition, providing the ozone entrance in multiple directions overcomes gravity.

In an embodiment of the present invention, the reaction field includes an exhaust pipe, a heat retainer device, or a catalytic converter. Ozone can clean and regenerate the heat retainer, the catalyst, and the ceramic body.

In an embodiment of the present invention, the temperature of the reaction field is -50-200 °C, which may be 60-70 °C, 50-80 °C, 40-90 °C, 30-100 °C, 20-110 °C, 10-120 °C, 0-130 °C, -10-140 °C, -20-150 °C, -30-160 °C, -40-170 °C, -50-180 °C, -180-190 °C, or 190-200 °C.

In an embodiment of the present invention, the temperature of the reaction field is 60-70 °C.

In an embodiment of the present invention, the engine tail gas ozone purification system further includes an ozone source configured to provide an ozone stream. The ozone stream may be generated instantly by the ozone generator. The ozone stream may also be stored ozone. The reaction field can be in fluid communication with the ozone source, and the ozone stream provided by the ozone source can be introduced into the reaction field so as to be mixed with the tail gas stream such that the tail gas stream undergoes oxidation treatment.

In an embodiment of the present invention, the ozone source includes an ozone storage unit and/or an ozone generator. The ozone source can include an ozone introduction pipeline and may also include an ozone generator. The ozone generator may include, but is not limited to, one or a combination of generators selected from an arc ozone generator, i.e., an extended-surface discharge ozone generator, a power frequency arc ozone generator, a high-frequency induction ozone generator, a low-pressure ozone generator, an ultraviolet ozone generator, an electrolyte ozone generator, a chemical agent ozone generator, and a ray irradiation particle generator.

In an embodiment of the present invention, the ozone generator includes one or a combination of generators selected from an extended-surface discharge ozone generator, a power frequency arc ozone generator, a high-frequency induction ozone generator, a low-pressure ozone generator, an ultraviolet ozone generator, an electrolyte ozone generator, a chemical agent ozone generator, and a ray irradiation particle generator.

In an embodiment of the present invention, the ozone generator includes an electrode. A catalyst layer is provided on the electrode. The catalyst layer includes an oxidation catalytic bond cracking selective catalyst layer.

In an embodiment of the present invention, the electrode includes a high-voltage electrode or a high-voltage electrode having a barrier dielectric layer. When the electrode includes a high-voltage electrode, the oxidation catalytic bond cracking selective catalyst layer 250 is provided on a surface of the high-voltage electrode 260 (as shown in FIG. 2). When the electrode includes a high-voltage electrode 260 provided with a barrier dielectric layer 270, the oxidation catalytic bond cracking selective catalyst layer 250 is provided on a surface of the barrier dielectric layer 270 (as shown in FIG. 3).

The high-voltage electrode refers to a direct-current or alternating-current electrode with a voltage higher than 500 V. An electrode is a polar plate that is used as an electrically conductive medium (a solid, gas, vacuum, or electrolyte solution) to input or export a current. The pole that inputs a current is referred to as an anode or a positive electrode, and the pole that emits a current is referred to as a cathode or a negative electrode.

The discharge-type ozone generation mechanism is mainly a physical (electrical) method. There are many types of discharge-type ozone generators, but the basic principle thereof is to use a high voltage to generate an electric field and then use the electric energy of the electric field to weaken or even break double bonds of oxygen to generate ozone. A structural schematic diagram of existing discharge-type ozone generator is shown in FIG. 4. This discharge-type ozone generator includes a high voltage alternating-current power supply 280, a high-voltage electrode 260, a barrier dielectric layer 270, an air gap 290, and a ground electrode 291. Under the action of the high-voltage electric field, double oxygen bonds of the oxygen molecules in the air gap 290 are broken by electric energy, and ozone is generated. However, there are limits to the use of electric field energy to generate ozone. At present, industry standards require that the electricity consumption per kg of ozone should not exceed 8 kWh, and the industry average level is about 7.5 kWh

In an embodiment of the present invention, the barrier dielectric layer is at least one material selected from a ceramic plate, a ceramic pipe, a quartz glass plate, a quartz plate, and a quartz pipe. The ceramic plate and the ceramic pipe may be a ceramic plate and a ceramic pipe made of an oxide such as aluminum oxide, zirconium oxide, and silicon oxide or a composite oxide thereof. In an embodiment of the present invention, when the electrode includes a high-voltage electrode, the oxidation catalytic bond cracking selective catalyst layer has a thickness of 1-3 mm, such as 1-1.5 mm or 1.5-3 mm. The oxidation catalytic bond cracking selective catalyst layer also serves as a barrier medium. When the electrode includes a high-voltage electrode having a barrier dielectric layer, the load capability of the oxidation catalytic bond cracking selective catalyst layer is 1-12 wt%, e.g., 1-5 wt% or 5-12 wt% of the barrier dielectric layer.

In an embodiment of the present invention, the oxidation catalytic bond cracking selective catalyst layer includes the following components in percentages by weight:
5-15%, e.g., 5-8%, 8-10%, 10-12%, 12-14% or 14-15% of an active component; and
85-95%, e.g., 85-86%, 86-88%, 88-90%, 90-92%, or 92-95% of a coating layer,
wherein, the active component is at least one material selected from compounds of a metal M and a metallic element M, and the metallic element M is at least one element selected from the group consisting of an alkaline earth metal element, a transition metal element, a fourth main group metal element, a noble metal element and a lanthanoid rare earth element;
the coating layer is at least one material selected from the group consisting of aluminum oxide, cerium oxide, zirconium oxide, manganese oxide, metal composite oxide, a porous material, and a layered material, and the metal composite oxide includes a composite oxide of one or more metals selected from aluminum, cerium, zirconium, and manganese.

In an embodiment of the present invention, the alkaline earth metal element is at least one element selected from the group consisting of magnesium, strontium, and calcium.

In an embodiment of the present invention, the transition metal element is at least one element selected from the group consisting of titanium, manganese, zinc, copper, iron, nickel, cobalt, yttrium, and zirconium.

In an embodiment of the present invention, the fourth main group metal element is tin.

In an embodiment of the present invention, the noble metal element is at least one element selected from the group consisting of platinum, rhodium, palladium, gold, silver and iridium.

In an embodiment of the present invention, the lanthanoid rare earth element is at least one element selected from the group consisting of lanthanum, cerium, praseodymium and samarium. In an embodiment of the present invention, the compound of the metallic element M is at least one material selected from the group consisting of oxides, sulfides, sulfates, phosphates, carbonates, and perovskites.

In an embodiment of the present invention, the porous material is at least one material selected from the group consisting of a molecular sieve, diatomaceous earth, zeolite, and a carbon nanotube. The porous material has the porosity of more than 60%, such as 60-80%, a specific surface area of 300-500 m2/g, and an average pore size of 10-100 nm.

In an embodiment of the present invention, the layered material is at least one material selected from the group consisting of graphene and graphite.

The oxidation catalytic bond cracking selective catalyst layer combines chemical and physical methods to reduce, weaken, or even directly break the double oxygen bond and fully exerts and uses the synergistic effect of an electric field and catalysis to achieve the purpose of significantly increasing the rate of ozone generation and the amount of ozone produced. Compared with existing discharge-type ozone generators, under the same conditions, the ozone generator of the present invention increases the amount of ozone generated by 10-30% and the rate of generation by 10-20%.

In an embodiment of the present invention, the engine tail gas ozone purification system further includes an ozone amount control device configured to control the amount of ozone so as to effectively oxidize gas components to be treated in tail gas. The ozone amount control device includes a control unit.

In an embodiment of the present invention, the ozone amount control device further includes a pre-ozone-treatment tail gas component detection unit configured to detect the contents of components in the tail gas before the ozone treatment.

In an embodiment of the present invention, the control unit controls the amount of ozone required in the mixing and reaction according to the contents of components in the tail gas before the ozone treatment.

In an embodiment of the present invention, the pre-ozone-treatment tail gas component detection unit is at least one selected from the following detection units:
a first volatile organic compound detection unit configured to detect the content of volatile organic compounds in the tail gas before the ozone treatment, such as a volatile organic compound sensor;
a first CO detection unit configured to detect the CO content in the tail gas before the ozone treatment, such as a CO sensor; and
a first nitrogen oxide detection unit configured to detect the nitrogen oxide content in the tail gas before the ozone treatment, such as a nitrogen oxide (NOx) sensor.

In an embodiment of the present invention, the control unit controls the amount of ozone required in the mixing and reaction according to an output value of at least one of the pre-ozone-treatment tail gas component detection units.

In an embodiment of the present invention, the control unit is configured to control the amount of ozone required in the mixing and reaction according to a preset mathematical model. The preset mathematical model is related to the content of tail gas components before ozone treatment. The amount of ozone required in the mixing and reaction is determined according to the above-mentioned content and the reaction molar ratio of the tail gas components to ozone. When the amount of ozone required in the mixing and reaction is determined, the amount of ozone can be increased to make the ozone excessive.

In an embodiment of the present invention, the control unit is configured to control the amount of ozone required in the mixing and reaction according to a theoretically estimated value.

In an embodiment of the present invention, the theoretically estimated value is a molar ratio of an ozone introduction amount to a substance to be treated in the tail gas, which is 2-10. For example, a controllable ozone introduction amount of a 13-L diesel engine is 300-500 g. and a controllable ozone introduction amount of a 2-L diesel engine is 5-20 g.

In an embodiment of the present invention, the ozone amount control device includes a post-ozone-treatment tail gas component detection unit configured to detect the contents of components in the tail gas after the ozone treatment.

In an embodiment of the present invention, the control unit controls the amount of ozone required in the mixing and reaction according to the contents of components in the tail gas after the ozone treatment.

In an embodiment of the present invention, the post-ozone-treatment tail gas component detection unit is at least one unit selected from the following detection units:
a first ozone detection unit configured to detect the ozone content in the tail gas after the ozone treatment;
a second volatile organic compound detection unit configured to detect the content of volatile organic compounds in the tail gas after the ozone treatment;
a second CO detection unit configured to detect the CO content in the tail gas after the ozone treatment; and
a second nitrogen oxide detection unit configured to detect the nitrogen oxide content in the tail gas after the ozone treatment.

In an embodiment of the present invention, the control unit controls the amount of ozone according to the output value of at least one of the post-ozone-treatment tail gas component detection units.

In an embodiment of the present invention, the engine tail gas ozone purification system further includes a denitration device configured to remove nitric acid in a product resulting from mixing and reacting the ozone stream with the tail gas stream.

In an embodiment of the present invention, the denitration device includes an electrocoagulation device, and the electrocoagulation device includes an electrocoagulation flow channel, a first electrode located in the electrocoagulation flow channel, and a second electrode.

In an embodiment of the present invention, the denitration device includes a condensing unit configured to condense the tail gas which has undergone the ozone treatment, thereby realizing gas-liquid separation.

In an embodiment of the present invention, the denitration device includes a leaching unit configured to leach the tail gas which has undergone the ozone treatment. The leaching is carried out with water and/or an alkali, for example.

In an embodiment of the present invention, the denitration device further includes a leacheate unit configured to provide leacheate to the leaching unit.

In an embodiment of the present invention, the leacheate in the leacheate unit includes water and/or an alkali.

In an embodiment of the present invention, the denitration device further includes a denitration liquid collecting unit configured to store an aqueous nitric acid solution and/or an aqueous nitrate solution removed from the tail gas.

In an embodiment of the present invention, the denitration liquid collecting unit stores the aqueous nitric acid solution, and the denitration liquid collecting unit is provided with an alkaline solution adding unit configured to form a nitrate with nitric acid.

In an embodiment of the present invention, the engine tail gas ozone purification system further includes an ozone digester configured to digest ozone in the tail gas which has undergone treatment in the reaction field. The ozone digester can perform ozone digestion by means of ultraviolet rays, catalysis, and the like.

In an embodiment of the present invention, the ozone digester is at least one type of digester selected from an ultraviolet ozone digester and a catalytic ozone digester.

In an embodiment of the present invention, the engine tail gas ozone purification system further includes a first denitration device configured to remove nitrogen oxides in the tail gas. The reaction field is configured to mix and react the tail gas which has been treated by the first denitration device with the ozone stream, or to mix and react the tail gas before being treated by the first denitration device with the ozone stream.

The first denitration device may be a prior art device that realizes denitration, such as at least one of a non-catalytic reduction device (e.g. ammonia gas denitration), a selective catalytic reduction device (SCR: ammonia gas plus catalyst denitration), a non-selective catalytic reduction device (SNCR), and an electron beam denitration device. The nitrogen oxide content (NOₓ) in the tail gas of the engine after treatment by the first denitration device does not meet the latest standards, but mixing and reacting the tail gas after or before the treatment by the first denitration device with the ozone stream can satisfy the latest standards.

In an embodiment of the present invention, the first denitration device is at least one selected from a non-catalytic reduction device, a selective catalytic reduction device, a non-selective catalytic reduction device, and an electron beam denitration device.

Based on the prior art, those skilled in the art believed that when nitrogen oxides NOx in engine tail gas are treated by ozone, the nitrogen oxides NOx are oxidized by ozone to high-valence nitrogen oxides such as NO₂, N₂O₅, and NO₃. The high-valence nitrogen oxides are still gases and cannot be removed from the engine tail gas. Namely, treatment of the nitrogen oxides NOx in the engine tail gas with the ozone is ineffective. However, the applicant found that the high-valence nitrogen oxides generated by the reaction between ozone and nitrogen oxides in tail gas are not final products. The high-valence nitrogen oxides will react with water to produce nitric acid, and the nitric acid is more easily removed from the engine tail gas, such as through use of electrocoagulation and condensation. This effect is unexpected to those skilled in the art. This unexpected technical effect is due to the fact that those skilled in the art did not realize that ozone would also react with VOC in the engine tail gas to produce sufficient water and high-valence nitrogen oxides to generate nitric acid.

When ozone is used to treat the engine tail gas, ozone reacts most preferentially with volatile organic compounds VOC to be oxidized into CO₂ and water. It is then oxidized with nitrogen oxides NOx into high-valence nitrogen oxides such as NO₂, N₂O₅, and NO₃, and finally reacts with carbon monoxide CO to be oxidized into CO₂. Thus, the order of priority of reactions is volatile organic compounds VOC > nitrogen oxides NOx > carbon monoxide CO. There are enough volatile organic compounds VOC in the tail gas to generate sufficient water, which can be fully reacted with high-valence nitrogen oxides to generate nitric acid. Therefore, the treatment of engine tail gas with ozone results in a better effect of removing NOₓ with ozone. This effect is an unexpected technical effect to those skilled in the art.

The following removal effect can be achieved by treating the engine tail gas with ozone: removal efficiency of nitrogen oxides NOₓ: 60-99.97%; removal efficiency of carbon monoxide CO: 1-50%; and removal efficiency of volatile organic compounds VOC: 60-99.97%. These are unexpected technical effects to those skilled in the art.

Nitric acid obtained from reaction of the high-valence nitrogen oxides with water obtained from oxidation of volatile organic compounds VOC is more easily removed, and the nitric acid obtained by the removal can be recycled. For example, the nitric acid can be removed by the electrocoagulation device in the present invention. The nitric acid can also be removed with a prior art method for removing nitric acid, such as alkaline washing. The electrocoagulation device in the present invention includes a first electrode and a second electrode. When water mist containing nitric acid flows through the first electrode, the water mist containing nitric acid is charged. The second electrode applies an attractive force to the charged water mist containing nitric acid, and the water mist containing nitric acid moves towards the second electrode until the water mist containing nitric acid is attached to the second electrode and then is collected. The electrocoagulation device in the present invention has a stronger collecting capability and a higher collecting efficiency for a water mist containing nitric acid.

A tail gas ozone purification method includes a step of mixing and reacting an ozone stream with a tail gas stream.

In an embodiment of the present invention, the tail gas stream includes nitrogen oxides and volatile organic compounds. The tail gas stream may be engine tail gas. The engine generally is a device converting chemical energy of fuel into mechanical energy. Specifically, it can be an internal combustion engine or the like. More specifically, the tail gas stream may be a diesel engine tail gas, for example. Nitrogen oxides (NOx) in the tail gas stream are mixed and reacted with the ozone stream to be oxidized into high-valence nitrogen oxides such as NO₂, N₂O₅, and NO₃. Volatile organic compounds (VOC) in the tail gas stream are mixed and reacted with the ozone stream to be oxidized into CO₂ and water. The high-valence nitrogen oxides react with water obtained from oxidation of the volatile organic compounds (VOC) to obtain nitric acid. Through the above reaction, the nitrogen oxides (NOx) in the tail gas stream are removed and exist in the exhaust gas in the form of nitric acid.

In an embodiment of the present invention, the ozone stream is mixed and reacted with the tail gas stream in a low-temperature section of the tail gas.

In an embodiment of the present invention, the ozone stream is mixed and reacted with the tail gas stream at a temperature of -50-200 °C, which may be 60-70 °C, 50-80 °C, 40-90 °C, 30-100 °C, 20-110 °C, 10-120 °C, 0-130 °C, -10-140 °C, -20-150 °C, -30-160 °C, -40-170 °C, -50-180 °C, -180-190 °C, or 190-200 °C.

In an embodiment of the present invention, the ozone stream is mixed and reacted with the tail gas stream at a temperature of 60-70 °C.

In an embodiment of the present invention, a mixing mode of the ozone stream with the tail gas stream is at least one mode selected from venturi mixing, positive pressure mixing, insertion mixing, dynamic mixing, and fluid mixing.

In an embodiment of the present invention, when the mixing mode of the ozone stream with the tail gas stream is positive pressure mixing, the pressure of an ozone intake is greater than the pressure of the tail gas. When the intake pressure of the ozone stream is lower than the outlet pressure of the tail gas stream, the venturi mixing mode can be used at the same time.

In an embodiment of the present invention, before the ozone stream is mixed and reacted with the tail gas stream, the flow velocity of the tail gas stream is increased, and the tail gas stream is mixed into the ozone stream by the venturi principle.

In an embodiment of the present invention, the mixing mode of the ozone stream with the tail gas stream is at least one mode selected from countercurrent introduction at a tail gas outlet, mixing in a front section of a reaction field, insertion before and after a deduster, mixing before and after a denitration device, mixing before and after a catalytic device, introduction before and after a water washing device, mixing before and after a filtering device, mixing before and after a silencing device, mixing in a tail gas pipeline, mixing outside of an adsorption device, and mixing before and after a condensation device. The ozone stream can be mixed in a low-temperature section of the engine tail gas to avoid decomposition of ozone.

In an embodiment of the present invention, a reaction field for mixing and reacting the ozone stream with the tail gas stream includes a pipeline and/or a reactor.

In an embodiment of the present invention, the reaction field includes an exhaust pipe, a heat retainer device or a catalytic converter.

In an embodiment of the present invention, at least one of the following technical features is further included:
1) the diameter of the pipeline is 100-200 mm.
2) the length of the pipeline is greater than 0.1 times the diameter of the pipeline.
3) the reactor is at least one type of reactor selected from the following:
   a first reactor: The first reactor has a reaction chamber in which the tail gas is mixed and reacted with the ozone;
   a second reactor: The second reactor includes a plurality of honeycomb-shaped cavities configured to provide spaces for mixing and reacting the tail gas with the ozone, wherein the honeycomb-shaped cavities are provided with gaps therebetween which are configured to introduce a cold medium and control a reaction temperature of the tail gas with the ozone.
   a third reactor: The third reactor includes a plurality of carrier units which provide reaction sites (for example, a honeycomb-shaped mesoporous ceramic carrier), when there is no carrier unit, the reaction is in the gas phase, and when there is a carrier unit, the reaction is an interface reaction, which shortens the reaction time.
   a fourth reactor: The fourth reactor includes a catalyst unit which is configured to promote oxidization reaction of the tail gas.
4) the reaction field is provided with an ozone entrance, which is at least one selected from a spout, a spray grid, a nozzle, a swirl nozzle, and a spout provided with a venturi tube. For a spout provided with a venturi tube, the venturi tube is provided in the spout, and ozone is mixed by the venturi principle.
5) the reaction field is provided with an ozone entrance through which the ozone enters the reaction field to contact the tail gas. The ozone entrance is provided in at least one of the following directions: a direction opposite to the flow direction of the tail gas, a direction perpendicular to the flow direction of the tail gas, a direction tangent to the flow direction of the tail gas, a direction inserted in the flow direction of the tail gas, and multiple directions in order to overcome gravity. A direction opposite to the flow direction of the tail gas means entering in the opposite direction, thereby increasing the reaction time and reducing the volume. A direction perpendicular to the flow direction of the tail gas means using the venturi effect. A direction tangent to the flow direction of the tail gas facilitates mixing. A direction inserted in the flow direction of the tail gas overcomes vortices. In addition, providing the ozone entrance in multiple directions overcomes gravity.

In an embodiment of the present invention, the ozone stream is provided by an ozone storage unit and/or an ozone generator.

In an embodiment of the present invention, the ozone generator includes one or a combination of generators selected from an extended-surface discharge ozone generator, a power frequency arc ozone generator, a high-frequency induction ozone generator, a low-pressure ozone generator, an ultraviolet ozone generator, an electrolyte ozone generator, a chemical agent ozone generator, and a ray irradiation particle generator.

In an embodiment of the present invention, the ozone stream is provided by the following method: under the effect of an electric field and an oxidation catalytic bond cracking selective catalyst layer, generating ozone from an oxygen-containing gas, wherein the oxidation catalytic bond cracking selective catalyst layer is loaded on an electrode forming the electric field.

In an embodiment of the present invention, the electrode includes a high-voltage electrode or an electrode provided with a barrier dielectric layer, when the electrode includes a high-voltage electrode, the oxidation catalytic bond cracking selective catalyst layer is loaded on a surface of the high-voltage electrode, and when the electrode includes a high-voltage electrode having a barrier dielectric layer, the oxidation catalytic bond cracking selective catalyst layer is loaded on a surface of the barrier dielectric layer.

In an embodiment of the present invention, when the electrode includes a high-voltage electrode, the oxidation catalytic bond cracking selective catalyst layer has a thickness of 1-3 mm, such as 1-1.5 mm or 1.5-3 mm. The oxidation catalytic bond cracking selective catalyst layer also serves as a barrier medium. When the electrode includes a high-voltage electrode having a barrier dielectric layer, the load capability of the oxidation catalytic bond cracking selective catalyst layer is 1-12 wt%, e.g., 1-5 wt% or 5-12 wt% of the barrier dielectric layer.

In an embodiment of the present invention, the oxidation catalytic bond cracking selective catalyst layer includes the following components in percentages by weight:
5-15%, e.g., 5-8%, 8-10%, 10-12%, 12-14% or 14-15% of an active component; and
85-95%, e.g., 85-86%, 86-88%, 88-90%, 90-92%, or 92-95% of a coating layer,
wherein, the active component is at least one material selected from compounds of a metal M and a metallic element M, and the metallic element M is at least one element selected from the group consisting of an alkaline earth metal element, a transition metal element, a fourth main group metal element, a noble metal element and a lanthanoid rare earth element;
the coating layer is at least one material selected from the group consisting of aluminum oxide, cerium oxide, zirconium oxide, manganese oxide, metal composite oxide, a porous material, and a layered material, and the metal composite oxide includes a composite oxide of one or more metals selected from aluminum, cerium, zirconium, and manganese.

In an embodiment of the present invention, the alkaline earth metal element is at least one element selected from the group consisting of magnesium, strontium, and calcium.

In an embodiment of the present invention, the transition metal element is at least one element selected from the group consisting of titanium, manganese, zinc, copper, iron, nickel, cobalt, yttrium, and zirconium.

In an embodiment of the present invention, the fourth main group metal element is tin.

In an embodiment of the present invention, the noble metal element is at least one element selected from the group consisting of platinum, rhodium, palladium, gold, silver and iridium.

In an embodiment of the present invention, the lanthanoid rare earth element is at least one element selected from the group consisting of lanthanum, cerium, praseodymium and samarium. In an embodiment of the present invention, the compound of the metallic element M is at least one material selected from the group consisting of oxides, sulfides, sulfates, phosphates, carbonates, and perovskites.

In an embodiment of the present invention, the porous material is at least one material selected from the group consisting of a molecular sieve, diatomaceous earth, zeolite, and a carbon nanotube. The porous material has the porosity of more than 60%, such as 60-80%, a specific surface area of 300-500 m2/g, and an average pore size of 10-100 nm.

In an embodiment of the present invention, the layered material is at least one material selected from the group consisting of graphene and graphite.

In an embodiment of the present invention, the electrode is loaded with an oxidation catalytic bond cracking selective catalyst layer through an impregnation and/or spraying method.

In an embodiment of the present invention, the following steps are included:
3) loading, according to the ratio of components of the catalyst, a slurry of raw materials of the coating layer on a surface of the high-voltage electrode or a surface of the barrier dielectric layer, followed by drying and calcination to obtain the high-voltage electrode or the barrier dielectric layer loaded with the coating layer; and
4) loading, according to the ratio of compositions of the catalyst, a raw solution or slurry containing the metallic element M on the coating layer obtained in step 1), followed by drying and calcination, when the coating layer is loaded on the surface of the barrier dielectric layer, after the calcination, providing the high-voltage electrode on another surface of the barrier dielectric layer opposite to the surface loaded with the coating layer, to obtain the ozone generator electrode; or according to the ratio of compositions of the catalyst, loading a raw solution or slurry containing the metallic element M on the coating layer obtained in step 1), followed by drying, calcination and post-treatment, when the coating layer is loaded on the surface of the barrier dielectric layer, after the post-treatment, providing the high-voltage electrode on another surface of the barrier dielectric layer opposite to the surface loaded with the coating layer, to obtain the ozone generator electrode,
wherein control over the form of active components in the electrode catalyst is realized by adjusting a calcination temperature and ambient conditions and through the post-treatment.

In an embodiment of the present invention, the following steps are included:
3) loading, according to the ratio of components of the catalyst, a raw solution or slurry containing the metallic element M on raw materials of the coating layer, followed by drying and calcination to obtain the coating layer material loaded with the active components; and
4) preparing, according to the ratio of components of the catalyst, the coating layer material loaded with the active components obtained in step 1) into a slurry, loading the slurry on the surface of the high-voltage electrode or a surface of the barrier dielectric layer, followed by drying and calcination, when the coating layer is loaded on the surface of the barrier dielectric layer, after the calcination, providing the high-voltage electrode on another surface of the barrier dielectric layer opposite to the surface loaded with the coating layer to obtain the ozone generator electrode; or according to the ratio of components of the catalyst, preparing the coating layer material loaded with the active components obtained in step 1) into a slurry, loading the slurry on the surface of the high-voltage electrode or the surface of the barrier dielectric layer, followed by drying, calcination and post-treatment, when the coating layer is loaded on the surface of the barrier dielectric layer, after the post-treatment, providing the high-voltage electrode on another surface of the barrier dielectric layer opposite to the surface loaded with the coating layer to obtain the ozone generator electrode,
wherein control over the form of active components in the electrode catalyst is realized by adjusting a calcination temperature and ambient conditions, and through the post-treatment.

The above-described loading mode may be impregnation, spraying, painting, and the like, as long as the loading can be realized.

When the active component includes at least one of sulfates, phosphates, and carbonates of a metallic element M, a solution or a slurry containing at least one of sulfates, phosphates, and carbonates of the metallic element M is loaded on raw materials of the coating layer, followed by drying and calcination, with a calcination temperature of no more than the decomposition temperature of the active component, for example to obtain sulfates of the metallic element M. The calcination temperature cannot exceed the decomposition temperature of sulfates. (The decomposition temperature is usually above 600 °C).

Control over the form of active components in the electrode catalyst is realized by adjusting the calcination temperature and ambient conditions and through the post-treatment. For example, when the active component includes the metal M, after the calcination, reduction (post treatment) can be carried out with a reducing gas, and the calcination temperature may be 200-550 °C. When the active component includes a sulfide of the metallic element M, after the calcination, reaction (post treatment) can be carried out with hydrogen sulfide, and the calcination temperature may be 200-550 °C.

An embodiment of the present invention includes controlling the amount of ozone in the ozone stream so as to effectively oxidize gas components to be treated in tail gas.

In an embodiment of the present invention, the amount of ozone in the ozone stream is controlled to achieve the following removal efficiency:
removal efficiency of nitrogen oxides: 60-99.97%;
removal efficiency of CO: 1-50%; and
removal efficiency of volatile organic compounds: 60-99.97%.

An embodiment of the present invention includes detecting contents of components in the tail gas before the ozone treatment.

In an embodiment of the present invention, the amount of ozone required in the mixing and reaction is controlled according to the contents of components in the tail gas before the ozone treatment.

In an embodiment of the present invention, detecting contents of components in the tail gas before the ozone treatment is at least one method selected from:
detecting the content of volatile organic compounds in the tail gas before the ozone treatment;
detecting the CO content in the tail gas before the ozone treatment; and
detecting the nitrogen oxide content in the tail gas before the ozone treatment.

In an embodiment of the present invention, the amount of ozone required in the mixing and reaction is controlled according to an output value of at least one of the contents of components in the tail gas before the ozone treatment.

In an embodiment of the present invention, the amount of ozone required in the mixing and reaction is controlled according to a preset mathematical model. The preset mathematical model is related to the content of tail gas components before ozone treatment. The amount of ozone required in the mixing and reaction is determined according to the above-mentioned content and the reaction molar ratio of the tail gas components to ozone. When the amount of ozone required in the mixing and reaction is determined, the amount of ozone can be increased to make the ozone excessive.

In an embodiment of the present invention, the amount of ozone required in the mixing and reaction is controlled according to a theoretically estimated value.

In an embodiment of the present invention, the theoretically estimated value is a molar ratio of an ozone introduction amount to a substance to be treated in the tail gas, which is 2-10such as 5-6, 5.5-6.5, 5-7, 4.5-7.5, 4-8, 3.5-8.5, 3-9, 2.5-9.5, 2-10. For example, a controllable ozone introduction amount of a 13-L diesel engine is 300-500 g. and a controllable ozone introduction amount of a 2-L diesel engine is 5-20 g.

An embodiment of the present invention includes detecting contents of components in the tail gas after the ozone treatment.

In an embodiment of the present invention, the amount of ozone required in the mixing and reaction is controlled according to the contents of components in the tail gas after the ozone treatment.

In an embodiment of the present invention, detecting contents of components in the tail gas after the ozone treatment is performed by at least one method selected from:
detecting the ozone content in the tail gas after the ozone treatment;
detecting the content of volatile organic compounds in the tail gas after the ozone treatment; detecting the CO content in the tail gas after the ozone treatment; and
detecting the nitrogen oxide content in the tail gas after the ozone treatment.

In an embodiment of the present invention, the amount of ozone is controlled according to an output value of at least one of the detected contents of components in the tail gas after the ozone treatment.

In an embodiment of the present invention, the tail gas ozone purification method further includes a step of removing nitric acid in a product resulting from mixing and reacting the ozone stream with the tail gas stream.

In an embodiment of the present invention, a gas carrying nitric acid mist is enabled to flow through the first electrode. When the gas carrying nitric acid mist flows through the first electrode, the first electrode enables the nitric acid mist in the gas to be charged, and the second electrode applies an attractive force to the charged nitric acid mist such that the nitric acid mist moves towards the second electrode until the nitric acid mist is attached to the second electrode.

In an embodiment of the present invention, a method for removing the nitric acid in the product resulting from mixing and reacting the ozone stream with the tail gas stream comprises condensing the product resulting from mixing and reacting the ozone stream with the tail gas stream.

In an embodiment of the present invention, a method for removing the nitric acid in the product resulting from mixing and reacting the ozone stream with the tail gas stream comprises leaching the product resulting from mixing and reacting the ozone stream with the tail gas stream.

In an embodiment of the present invention, the method for removing the nitric acid in the product resulting from mixing and reacting the ozone stream with the tail gas stream further includes supplying leacheate to the product resulting from mixing and reacting the ozone stream with the tail gas stream.

In an embodiment of the present invention, the leacheate is water and/or an alkali.

In an embodiment of the present invention, the method for removing the nitric acid in the product resulting from mixing and reacting the ozone stream with the tail gas stream further includes storing an aqueous nitric acid solution and/or an aqueous nitrate solution removed from the tail gas.

In an embodiment of the present invention, when the aqueous nitric acid solution is stored, an alkaline solution is added to form a nitrate with nitric acid.

In an embodiment of the present invention, the tail gas ozone purification method further includes a step of performing ozone digestion on the tail gas from which the nitric acid is removed. For example, digestion can be performed by means of ultraviolet rays, catalysis, and the like.

In an embodiment of the present invention, the ozone digestion is at least one type of digestion selected from ultraviolet digestion and catalytic digestion.

In an embodiment of the present invention, the tail gas ozone purification method further includes the following steps: removing nitrogen oxides in the tail gas a first time; and mixing and reacting the tail gas stream, from which the nitrogen oxides were removed the first time, with the ozone stream, or mixing and reacting the tail gas stream with the ozone stream before removing the nitrogen oxides in the tail gas the first time.

The method for removing nitrogen oxides in the tail gas a first time may be a prior art method that realizes denitration, such as at least one of a non-catalytic reduction method (e.g. ammonia gas denitration), a selective catalytic reduction method (SCR: ammonia gas plus catalyst denitration), a non-selective catalytic reduction method (SNCR) and an electron beam denitration method. The nitrogen oxide content (NOₓ) in the tail gas after the nitrogen oxides in the tail gas are removed the first time does not meet the latest standards, but mixing and reacting the nitrogen oxides after or before removing the tail gas the first time with the ozone can satisfy the latest standards. In an embodiment of the present invention, the method for removing nitrogen oxides in the tail gas the first time is at least one method selected from a non-catalytic reduction method, a selective catalytic reduction method, a non-selective catalytic reduction method, and an electron beam denitration method.

In an embodiment of the present invention, an electrocoagulation device is provided, including an electrocoagulation flow channel, a first electrode located in the electrocoagulation flow channel, and a second electrode. When the tail gas flows through the first electrode in the electrocoagulation flow channel, water mist containing nitric acid, i.e., a nitric acid solution in the tail gas is charged, the second electrode applies an attractive force to the charged nitric acid solution, and the water mist containing nitric acid moves towards the second electrode until the water mist containing nitric acid is attached to the second electrode, thus removing the nitric acid solution in the tail gas. The electrocoagulation device is also referred to as an electrocoagulation demisting device.

In an embodiment of the present invention, the first electrode may be in one or a combination of more states of solid, liquid, a gas molecular group, a plasma, an electrically conductive substance in a mixed state, a natural mixed electrically conductive of organism, or an electrically conductive substance formed by manual processing of an object. When the first electrode is a solid, a solid metal such as 304 steel or other solid conductor such as graphite can be used for the first electrode.

When the first electrode is a liquid, the first electrode may be an ion-containing electrically conductive liquid.

In an embodiment of the present invention, the shape of the first electrode may be a point shape, a linear shape, a net shape, a perforated plate shape, a plate shape, a needle rod shape, a ball cage shape, a box shape, a tubular shape, a natural shape of a substance, or a processed shape of a substance. When the first electrode has a plate shape, a ball cage shape, a box shape, or a tubular shape, the first electrode may have a non-porous structure, or it may have a porous structure. When the first electrode has a porous structure, the first electrode can be provided with one or more front through holes. In an embodiment of the present invention, the front through hole may have a polygonal shape, a circular shape, an oval shape, a square shape, a rectangular shape, a trapezoidal shape, or a diamond shape. In an embodiment of the present invention, the front through hole may have a diameter of 10-100 mm, 10-20 mm, 20-30 mm, 30-40 mm, 40-50 mm, 50-60 mm, 60-70 mm, 70-80 mm, 80-90 mm, or 90-100 mm. In other embodiments, the first electrode may also have other shapes.

In an embodiment of the present invention, the shape of the second electrode may be a multilayered net shape, a net shape, a perforated plate shape, a tubular shape, a barrel shape, a ball cage shape, a box shape, a plate shape, a particle-stacked layer shape, a bent plate shape, or a panel shape. When the second electrode has a plate shape, a ball cage shape, a box shape, or a tubular shape, the second electrode may also have a non-porous structure or a porous structure. When the second electrode has a porous structure, the second electrode can be provided with one or more rear through holes. In an embodiment of the present invention, the rear through hole may have a polygonal shape, a circular shape, an oval shape, a square shape, a rectangular shape, a trapezoidal shape, or a diamond shape. The rear through hole may have a diameter of 10-100 mm, 10-20 mm, 20-30 mm, 30-40 mm, 40-50 mm, 50-60 mm, 60-70 mm, 70-80 mm, 80-90 mm, or 90-100 mm.

In an embodiment of the present invention, the second electrode is made of an electrically conductive substance. In an embodiment of the present invention, the second electrode has an electrically conductive substance on a surface thereof.

In an embodiment of the present invention, an electrocoagulation electric field is provided between the first electrode and the second electrode. The electrocoagulation electric field may be one or a combination of electric fields selected from a point-plane electric field, a line-plane electric field, a net-plane electric field, a point-barrel electric field, a line-barrel electric field, and a net-barrel electric field. For example, the first electrode may have a needle shape or a linear shape, the second electrode may have a planar shape, and the first electrode may be perpendicular or parallel to the second electrode so as to form a line-plane electric field. Alternatively, the first electrode may have a net shape, the second electrode may have a planar shape, and the first electrode may be parallel to the second electrode so as to form a net-plane electric field. As another alternative, the first electrode may have a point shape and be held in place by a metal wire or a metal needle, the second electrode may have a barrel shape, and the first electrode may be located at a geometric center of symmetry of the second electrode so as to form a point-barrel electric field. As still another alternative, the first electrode may have a linear shape and be held in place by a metal wire or a metal needle, the second electrode may have a barrel shape, and the first electrode may be located at a geometric axis of symmetry of the second electrode so as to form a line-barrel electric field. As a further alternative, the first electrode may have a net shape and be held in place by a metal wire or a metal needle, the second electrode may have a barrel shape, and the first electrode may be located at a geometric center of symmetry of the second electrode so as to form a net-barrel electric field. When the second electrode has a planar shape, it specifically may have a flat surface shape, a curved surface shape, or a spherical surface shape. When the first electrode has a linear shape, it specifically may have a straight line shape, a curved shape, or a circular shape. The first electrode may further have an arcuate shape. When the first electrode has a net shape, it specifically may have a flat surface shape, a spherical surface shape, or other geometric surface shapes. It may also have a rectangular shape or an irregular shape. The first electrode may also have a point shape, it which case it may be a real point with a very small diameter, or it may be a small ball or a net-shaped ball. When the second electrode has a barrel shape, the second electrode may also be further evolved into various box shapes. The first electrode can also be changed accordingly to form an electrode and a layer of electrocoagulation electric field.

In an embodiment of the present invention, the first electrode has a linear shape, and the second electrode has a planar shape. In an embodiment of the present invention, the first electrode is perpendicular to the second electrode. In an embodiment of the present invention, the first electrode is parallel to the second electrode. In an embodiment of the present invention, the first electrode and the second electrode both have a planar shape, and the first electrode is parallel to the second electrode. In an embodiment of the present invention, the first electrode uses a wire mesh. In an embodiment of the present invention, the first electrode has a flat surface shape or a spherical surface shape. In an embodiment of the present invention, the second electrode has a curved surface shape or a spherical surface shape. In an embodiment of the present invention, the first electrode has a point shape, a linear shape, or a net shape, the second electrode has a barrel shape, the first electrode is located inside the second electrode, and the first electrode is located on a central axis of symmetry of the second electrode.

In an embodiment of the present invention, the first electrode is electrically connected with one electrode of a power supply, and the second electrode is electrically connected with the other electrode of the power supply. In an embodiment of the present invention, the first electrode is specifically electrically connected with a cathode of the power supply, and the second electrode is specifically electrically connected with an anode of the power supply.

In some embodiments of the present invention, the first electrode of the electrocoagulation device may have a positive potential or a negative potential. When the first electrode has a positive potential, the second electrode has a negative potential. When the first electrode has a negative potential, the second electrode has a positive potential. The first electrode and the second electrode are both electrically connected with a power supply. Specifically, the first electrode and the second electrode can be electrically connected with positive and negative poles, respectively, of the power supply. The voltage of this power supply is referred to as a power-on drive voltage. Selection of the magnitude of the power-on drive voltage is base on the environmental temperature, the temperature of a medium, and the like. For example, a range of the power-on drive voltage of the power supply may be 5-50 KV, 10-50 KV, 5-10 KV, 10-20 KV, 20-30 KV, 30-40 KV, or 40-50 KV, from bioelectricity to electricity for space haze management. The power supply may be a direct-current power supply or an alternating-current power supply, and a waveform of the power-on drive voltage is a direct-current waveform, a sine waveform, or a modulated waveform. A direct-current power supply is basically used for adsorption, and a sine wave is used for movement. For example, when the power-on drive voltage of between the first electrode and the second electrode is a sine wave, the electrocoagulation electric field generated will drive the charged particles, e.g., mist drops in the electrocoagulation electric field to move toward the second electrode. An oblique wave is used for pulling. The waveform needs to be modulated according to a pulling force, such as at edges of two ends of an asymmetric electrocoagulation electric field. Tension generated by a medium therein has obvious directionality so as to drive the medium in the electrocoagulation electric field to move in this direction. When the power supply is an alternating-current power supply, the range of a variable frequency pulse thereof may be 0.1 Hz-5 GHz, 0.1 Hz-1 Hz, 0.5 Hz-10 Hz, 5 Hz-100 Hz, 50 Hz-1 KHz, 1 KHz-100 KHz, 50 KHz-1 MHz, 1 MHz -100 MHz, 50 MHz-1 GHz, 500 MHz-2 GHz, or 1 GHz-5 GHz, which is suitable for adsorption of living organisms to pollutants. The first electrode may serve as a lead, and when contacting the nitric acid-containing water mist, it directly introduces positive and negative electrodes into the nitric acid-containing water mist, in which case the nitric acid-containing water mist itself can serve as an electrode. The first electrode can transfer electrons to the nitric acid-containing water mist or electrode by the method of energy fluctuation, so that the first electrode can be kept away from the nitric acid-containing water mist. During the movement of the nitric acid-containing water mist from the first electrode to the second electrode, electrons will be repeatedly obtained and lost. At the same time, a large number of electrons are transferred among a plurality of nitric acid-containing water mists located between the first electrode and the second electrode so that more mist drops are charged and finally reach the second electrode, thereby forming a current, which is also referred to as a power-on drive current. The magnitude of the power-on drive current is related to the temperature of the environment, the medium temperature, the amount of electrons, the mass of the adsorbed material, and the escape amount. For example, as the number of electrons increases, the number of movable particles such as mist drops increases, and the current generated by the moving charged particles is increased thereby. The more charged substances such as mist drops that are adsorbed per unit time, the greater the current is. The escaping mist drops only carry electricity, but they do not reach the second electrode. Namely, no effective electrical neutralization occurs. Thus, under the same conditions, the more escaping mist drops there are, the smaller the current is. Under the same conditions, the higher the temperature of the environment is, the faster the gas particles and mist drops are and the higher their own kinetic energy is, so the greater is the probability of their collision with the first electrode and the second electrode, and the less likely it is that they are adsorbed by the second electrode so as to escape. However. as they escape after electrical neutralization and possibly after repeated electrical neutralization, the electron conduction speed is accordingly increased, and the current is also increased accordingly. At the same time, the higher the temperature of the environment is, the higher is the momentum of gas molecules, mist drops, etc, and the less likely they are to be adsorbed by the second electrode. Even if they are adsorbed by the second electrode, the probability of their escaping from the second electrode again, namely, the probability of their escaping after electrical neutralization is also larger. Therefore, when the distance between the first electrode and the second electrode is not changed, it is necessary to increase the power-on drive voltage. The limit on the power-on drive voltage is the voltage which achieves the effect of air breakdown. In addition, the influence of the medium temperature is basically equivalent to the influence of the temperature of the environment. The is lower the temperature of the medium, the smaller is the energy required to excite the medium such as the mist drops to be charged, and the smaller is the kinetic energy of the medium. Under the action of the same electrocoagulation electric field force, the medium is more likely to be adsorbed on the second electrode, thereby forming a larger current. The electrocoagulation device has a better adsorption effect on a cold nitric acid-containing water mist. As the concentration of the medium such as mist drops increases, the greater is the probability that a charged medium has an electron transfer with another medium before colliding with the second electrode, the greater is the chance of performing effective electrical neutralization, and the larger the formed current correspondingly will be. Therefore, the higher the concentration of the medium, the greater is the current generated. The relationship between the power-on drive voltage and the medium temperature is basically the same as the relationship between the power-on drive voltage and the temperature of the environment.

In an embodiment of the present invention, the power-on drive voltage of the power supply connected with the first electrode and the second electrode may be lower than a corona inception voltage. The corona inception voltage is the minimum voltage capable of generating electrical discharge between the first electrode and the second electrode and ionizing the gas. The magnitude of the corona inception voltage may be different for different gases, different working environments, and the like. However, for those skilled in the art, the corresponding corona inception voltage is determined for a certain gas and working environment. In one embodiment of the present invention, the power-on drive voltage of the power supply specifically may be 0.1-2 kv/mm. The power-on drive voltage of the power supply is less than the air corona onset voltage. In an embodiment of the present invention, the first electrode and the second electrode both extend along a left-right direction, and a left end of the first electrode is located to the left of a left end of the second electrode.

In an embodiment of the present invention, there are two second electrodes, and the first electrode is located between the two second electrodes.

The distance between the first electrode and the second electrode can be set in accordance with the magnitude of the power-on drive voltage between the two electrodes, the flow velocity of the water mist, the charging ability of the nitric acid-containing water mist, and the like. For example, the distance between the first electrode and the second electrode may be 5-50 mm, 5-10 mm, 10-20 mm, 20-30 mm, 30-40 mm, or 40-50 mm. The greater the distance between the first electrode and the second electrode, the higher is the power-on drive voltage required to form a sufficiently strong electrocoagulation electric field for driving the charged medium to move quickly toward the second electrode so as to avoid medium escape. Under the same conditions, the larger the distance between the first electrode and the second electrode is, along the airflow direction, the faster the flow velocity of the substance closer to the central position is; the slower the flow velocity of the substance closer to the second electrode is. In a direction perpendicular to the direction of airflow, the charged medium particles, such as mist particles, are accelerated by the electrocoagulation electric field for a longer time without collision as the distance between the first electrode and the second electrode is increased. Under the same conditions, if the power-on drive voltage is unchanged, as the distance is increased, the strength of the electrocoagulation electric field is continuously reduced, and the medium in the electrocoagulation electric field has a weaker charging ability.

The first electrode and the second electrode constitute an adsorption unit. There may be one or a plurality of adsorption units. In one embodiment, there is one adsorption unit. In another embodiment, there is a plurality of adsorption units so as to adsorb more nitric acid solution using the plurality of adsorption units, thereby improving the effect of collecting the nitric acid solution. When there is a plurality of adsorption units, the distribution of all of the adsorption units can be flexibly adjusted as required. All the adsorption units may be the same or different from each other. For example, all the adsorption units can be distributed along one or more of a left-right direction, a front-back direction, an oblique direction, or a spiral direction so as to meet requirements of different air volumes. All the adsorption units may be distributed in a rectangular array, and may also be distributed in a pyramid shape. A first electrode and a second electrode of various shapes above can be combined freely to form the adsorption unit. For example, a linear first electrode may be inserted into a tubular second electrode to form an adsorption unit which is then combined with a linear first electrode to form a new adsorption unit, in which case the two linear first electrodes can be electrically connected. The new adsorption unit is then distributed in one or more of a left-right direction, an up-down direction, an oblique direction, or a spiral direction. As another example, a linear first electrode may be inserted into a tubular second electrode to form an adsorption unit which is distributed in one or more of a left-right direction, an up-down direction, an oblique direction, or a spiral direction to form a new adsorption unit. This new adsorption unit is then combined with the first electrode of various shapes described above so as to form a new adsorption unit. The distance between the first electrode and the second electrode in the adsorption unit can be arbitrarily adjusted so as to meet requirements of different working voltages and adsorption objects. Different adsorption units can be combined with each other. Different adsorption units can use a single power supply and may also use different power supplies. When different power supplies are used, the respective power supplies may have the same or different power-on drive voltages. In addition, there may a plurality of the present electrocoagulation device, and all the electrocoagulation devices may be distributed in one or more of a left-right direction, an up-down direction, a spiral direction, and an oblique direction.

In an embodiment of the present invention, the electrocoagulation device further includes an electrocoagulation housing. The electrocoagulation housing includes an electrocoagulation entrance, an electrocoagulation exit, and the electrocoagulation flow channel. Two ends of the electrocoagulation flow channel respectively communicate with the electrocoagulation entrance and the electrocoagulation exit. In an embodiment of the present invention, the electrocoagulation entrance has a circular shape, and the electrocoagulation entrance has a diameter of 300 mm-1000 mm or a diameter of 500 mm. In an embodiment of the present invention, the electrocoagulation exit has a circular shape, and the electrocoagulation exit has a diameter of 300 mm-1000 mm or a diameter of 500 mm. In an embodiment of the present invention, the electrocoagulation housing includes a first housing portion, a second housing portion, and a third housing portion distributed in sequence in a direction from the electrocoagulation entrance to the electrocoagulation exit. The electrocoagulation entrance is located at one end of the first housing portion, and the electrocoagulation exit is located at one end of the third housing portion. In an embodiment of the present invention, the size of an outline of the first housing portion gradually increases in the direction from the electrocoagulation entrance to the electrocoagulation exit. In an embodiment of the present invention, the first housing portion has a straight tube shape. In an embodiment of the present invention, the second housing portion has a straight tube shape, and the first electrode and the second electrode are mounted in the second housing portion. In an embodiment of the present invention, the size of the outline of the third housing portion gradually decreases in the direction from the electrocoagulation entrance to the electrocoagulation exit. In an embodiment of the present invention, cross sections of the first housing portion, the second housing portion, and the third housing portions are all rectangular. In an embodiment of the present invention, the electrocoagulation housing is made of stainless steel, an aluminum alloy, an iron alloy, cloth, a sponge, a molecular sieve, activated carbon, foamed iron, or foamed silicon carbide. In an embodiment of the present invention, the first electrode is connected to the electrocoagulation housing through an electrocoagulation insulating part. In an embodiment of the present invention, the electrocoagulation insulating part is made of insulating mica. In an embodiment of the present invention, the electrocoagulation insulating part has a columnar shape or a tower-like shape. In an embodiment of the present invention, the first electrode is provided with a front connecting portion having a cylindrical shape, and the front connecting portion is fixedly connected with the electrocoagulation insulating part. In an embodiment of the present invention, the second electrode is provided with a rear connecting portion having a cylindrical shape, and the rear connecting portion is fixedly connected with the electrocoagulation insulating part.

In an embodiment of the present invention, the first electrode is located in the electrocoagulation flow channel. In an embodiment of the present invention, the ratio of the cross-sectional area of the first electrode to the cross-sectional area of the electrocoagulation flow channel is 99%-10%, 90-10%, 80-20%, 70-30%, 60-40%, or 50%. The cross-sectional area of the first electrode refers to the sum of the areas of entity parts of the first electrode along a cross section.

In the process of collecting the nitric acid-containing water mist, the nitric acid-containing water mist enters the electrocoagulation housing through the electrocoagulation entrance and moves towards the electrocoagulation exit. In the process of moving towards the electrocoagulation exit, the nitric acid-containing water mist passes through the first electrode and is charged. The second electrode adsorbs the charged nitric acid-containing water mist so as to collect the nitric acid-containing water mist on the second electrode. In the present invention, the electrocoagulation housing guides the tail gas and the nitric acid-containing water mist to flow through the first electrode to enable the nitric acid-containing water mist to be charged using the first electrode, and the nitric acid-containing water mist is collected using the second electrode, thus effectively reducing the nitric acid-containing water mist flowing out from the electrocoagulation exit. In some embodiments of the present invention, the electrocoagulation housing can be made of a metal, a nonmetal, a conductor, a nonconductor, water, various electrically conductive liquids, various porous materials, various foam materials, and the like. When the electrocoagulation housing is made of metal, specific examples of the metal are stainless steel, an aluminum alloy, and the like. When the electrocoagulation housing is made of a nonmetal, specific examples of the material of the electrocoagulation housing are cloth, a sponge, and the like. When the material forming the electrocoagulation housing is a conductor, specific examples of the material are iron alloys or the like. When the electrocoagulation housing is a made of a nonconductor, a water layer is formed on a surface thereof, and the water becomes an electrode, such as a sand layer after absorbing water. When the electrocoagulation housing is made of water and various electrically conductive liquids, the electrocoagulation housing is stationary or flowing. When the material forming the electrocoagulation housing is various porous materials, specific examples of the material are a molecular sieve and activated carbon. When the material forming the electrocoagulation housing is various foam materials, specific examples of the material are foamed iron, foamed silicon carbide, and the like. In an embodiment, the first electrode is fixedly connected to the electrocoagulation housing through an electrocoagulation insulating part, and the material forming the electrocoagulation insulating part is insulating mica. In an embodiment, the second electrode is directly electrically connected with the electrocoagulation housing. This manner of connection can allow the electrocoagulation housing to have the same potential as the second electrode. Thus, the electrocoagulation housing can also adsorb the charged nitric acid-containing water mist, and the electrocoagulation housing also constitutes a kind of second electrode. The above-described electrocoagulation flow channel in which the first electrode is mounted is provided in the electrocoagulation housing.

When the nitric acid-containing water mist is attached to the second electrode, condensation will be formed. In some embodiments of the present invention, the second electrode can extend in an up-down direction. In this way, when the condensation accumulated on the second electrode reaches a certain weight, the condensation will flow downward along the second electrode under the effect of gravity and finally gather in a set position or device, thus realizing recovery of the nitric acid solution attached to the second electrode. The present electrocoagulation device can be used for refrigeration and demisting. In addition, the substance attached to the second electrode may also be collected by externally applying an electrocoagulation electric field. The direction of collecting substance on the second electrode may be the same as or different from the direction of the airflow. In specific implementation, the gravity effect is fully utilized to enable water drops or a water layer on the second electrode to flow into the collecting tank as soon as possible. At the same time, the speed of the water flow on the second electrode is accelerated using the direction and force of the airflow as much as possible. Therefore, the above objects can be achieved as much as possible according to various installation conditions, convenience, economy, feasibility and the like of insulation, regardless of a specific direction.

The existing electrostatic field charging theory is that corona discharge is utilized to ionize oxygen, a large amount of negative oxygen ions are generated, the negative oxygen ions contact dust, the dust is charged, and the charged dust is adsorbed by an electrode of opposing polarity. However, with a low specific resistance substance such as nitric acid-containing water mist, the existing electric field adsorption effect is almost gone. Because a low specific resistance substance easily loses power after being electrified, when the moving negative oxygen ions charge the low specific resistance substance, the low specific resistance substance quickly loses electricity, and the negative oxygen ions move only once. Therefore, a low specific resistance substance such as the nitric acid-containing water mist is difficult to charge again after losing electricity, or this charging mode greatly reduces the charging probability of the low specific resistance substance. As a result, the low specific resistance substance is in an uncharged state as a whole, so it is difficult for an electrode of opposing polarity to continuously apply an adsorption force to the low specific resistance substance. In the end, the adsorption efficiency of the existing electric field with respect to a low specific resistance substance such as a nitric acid-containing water mist is extremely low. With the electrocoagulation device and the electrocoagulation method described above, the water mist is not electrified in a charging mode. Instead, electrons are directly transmitted to the nitric acid-containing water mist to charge the water mist, and after a certain mist drop is electrified and loses electricity, new electrons are quickly transmitted to the mist drop that loses electricity by the first electrode through other mist drops such that the mist drop can be quickly electrified after losing electricity. As a result, the electrification probability of the mist drop is greatly increased. If this process is repeated, the whole mist drop is in an electrified state, and the second electrode can continuously apply an attractive force to the mist drop until the mist drop is adsorbed, thereby ensuring a higher collection efficiency of the present electrocoagulation device with respect to the nitric acid-containing water mist. The above-described method for charging the mist drops used in the present invention, without using corona wires, corona electrodes, corona plates or the like, simplifies the integral structure of the present electrocoagulation device and reduces the manufacturing cost of the present electrocoagulation device. Using the above-described electrifying mode in the present invention also enables a large number of electrons on the first electrode to be transferred to the second electrode through the mist drops and form a current. When the concentration of the water mist flowing through the present electrocoagulation device is higher, electrons on the first electrode are more easily transferred to the second electrode through the nitric acid-containing water mist, and more electrons are transferred among the mist drops. As a result, the current formed between the first electrode and the second electrode is bigger, the electrification probability of the mist drops is higher, and the present electrocoagulation device has higher water mist collection efficiency.

In an embodiment of the present invention, an electrocoagulation demisting method is provided, including the following steps:
enabling a gas carrying water mist to flow through a first electrode; and
enabling the water mist in the gas to be charged by the first electrode when the gas carrying water mist flows through the first electrode, and applying an attractive force to the charged water mist by the second electrode such that the water mist moves towards the second electrode until the water mist is attached to the second electrode.

In an embodiment of the present invention, the first electrode directs the electrons into the water mist, and the electrons are transferred among the mist drops located between the first electrode and the second electrode to enable more mist drops to be charged.

In an embodiment of the present invention, electrons are conducted between the first electrode and the second electrode through the water mist and form a current.

In an embodiment of the present invention, the first electrode enables the water mist to be charged by contacting the water mist.

In an embodiment of the present invention, the first electrode enables the water mist to be charged by energy fluctuation.

In an embodiment of the present invention, the water mist attached to the second electrode forms water drops, and the water drops on the second electrode flow into a collecting tank.

In an embodiment of the present invention, the water drops on the second electrode flow into the collecting tank under the effect of gravity.

In an embodiment of the present invention, the gas, when flowing, will blow the water drops so as to flow into the collecting tank.

In an embodiment of the present invention, a gas carrying nitric acid mist is enabled to flow through the first electrode. When the gas carrying nitric acid mist flows through the first electrode, the first electrode enables the nitric acid mist in the gas to be charged, and the second electrode applies an attractive force to the charged nitric acid mist such that the nitric acid mist moves towards the second electrode until the nitric acid mist is attached to the second electrode.

In an embodiment of the present invention, the first electrode directs electrons into the nitric acid mist, and the electrons are transferred among the mist drops located between the first electrode and the second electrode to enable more mist drops to be charged.

In an embodiment of the present invention, electrons are conducted between the first electrode and the second electrode through the nitric acid mist and form a current.

In an embodiment of the present invention, the first electrode enables the nitric acid mist to be charged by contacting the nitric acid mist.

In an embodiment of the present invention, the first electrode enables the nitric acid mist to be charged by energy fluctuation.

In an embodiment of the present invention, the nitric acid mist attached to the second electrode forms water drops, and the water drops on the second electrode flow into a collecting tank.

In an embodiment of the present invention, the water drops on the second electrode flow into the collecting tank under the effect of gravity.

In an embodiment of the present invention, the gas, when flowing, will blow the water drops so as to flow into the collecting tank.

### Embodiment 1

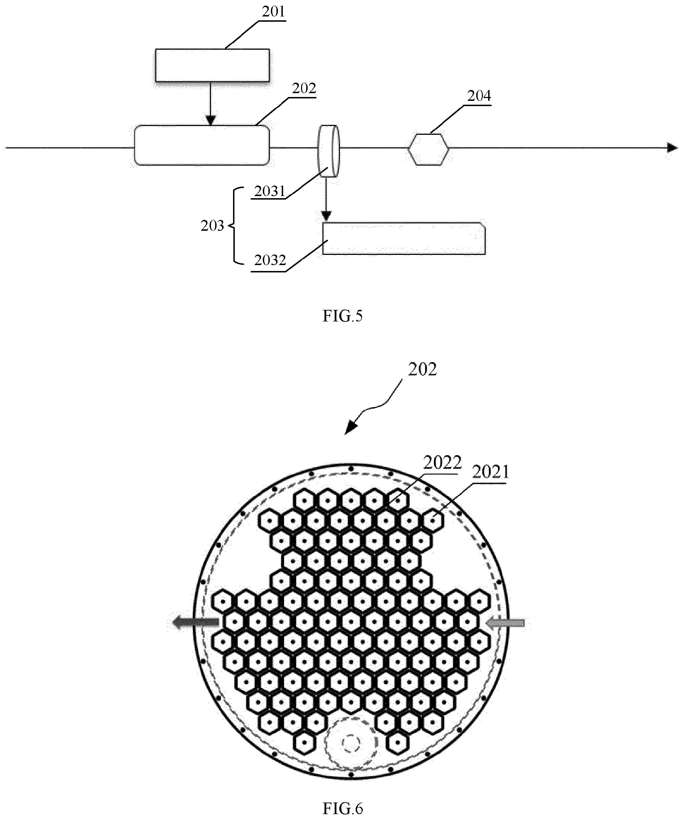

As shown in FIG. 5, an engine tail gas ozone purification system includes the following:
an ozone source 201 configured to provide an ozone stream that is generated instantly by an ozone generator,
a reaction field 2 configured to mix and react the ozone stream with a tail gas stream,
a denitration device 203 configured to remove nitric acid in a product resulting from mixing and reacting the ozone stream with the tail gas stream, wherein the denitration device 203 includes an electrocoagulation device 2031 configured to perform electrocoagulation on the ozone-treated tail gas of the engine, and nitric acid-containing water mist is accumulated on a second electrode of the electrocoagulation device 2031, the denitration device 203 further including a denitration liquid collecting unit 2032 configured to store an aqueous nitric acid solution and/or an aqueous nitrate solution removed from the exhaust gas, and when the denitration liquid collecting unit stores the aqueous nitric acid solution, the denitration liquid collecting unit 2032 is provided with an alkaline solution adding unit configured to form a nitrate with nitric acid, and
an ozone digester 204 configured to digest ozone in the tail gas which has undergone treatment in the reaction field, wherein the ozone digester can perform ozone digestion by means of ultraviolet rays, catalysis, and the like.

As shown in FIG. 6, the reaction field 202 is a second reactor provided therein with a plurality of honeycomb-shaped cavities 2021 configured to provide spaces for mixing and reacting the tail gas with the ozone. The honeycomb-shaped cavities are provided with gaps 2022 therebetween which are configured to introduce a cold medium and control a reaction temperature of the tail gas with the ozone. In the figure, the arrow on the right side indicates a cold medium inlet, and the arrow on the left side indicates a cold medium outlet.

The electrocoagulation device includes the following:
a first electrode 301 capable of conducting electrons to a nitric acid-containing water mist (a low specific resistance substance), wherein when the electrons are conducted to the nitric acid-containing water mist, the nitric acid-containing water mist is charged; and
a second electrode 302 capable of applying an attractive force to the charged nitric acid-containing water mist.

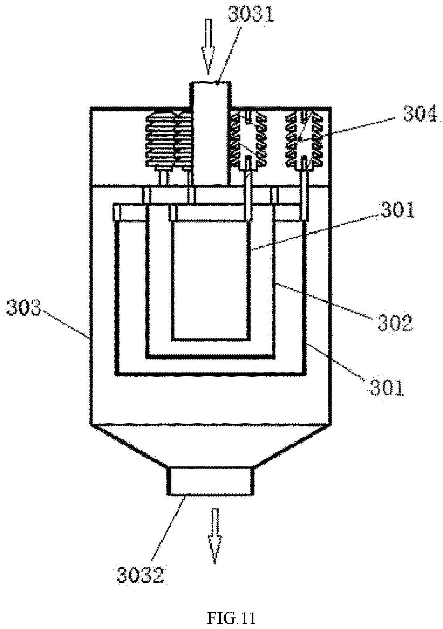

In the present embodiment, there are two first electrodes 301, and the two first electrodes 301 both have a net shape and a ball-cage shape. In the present embodiment, there is one second electrode 302, which has a net shape and a ball-cage shape. The second electrode 302 is located between the two first electrodes 301. As shown in FIG. 11, the electrocoagulation device in the present embodiment further includes a housing 303 having an entrance 3031 and an exit 3032. The first electrodes 301 and the second electrode 302 are all mounted in the housing 303. The first electrodes 301 are fixedly connected to an inner wall of the housing 303 through insulating parts 304, and the second electrode 302 is directly fixedly connected to the housing 303. In the present embodiment, the insulating parts 304 are in the shape of columns, which are also referred to as insulating columns. In the present embodiment, the first electrodes 301 have a negative potential, and the second electrode 302 has a positive potential. In the present embodiment, the housing 303 and the second electrode 302 have the same potential, and the housing 303 also plays a role in adsorbing charged substances.

In the present embodiment, the electrocoagulation device is configured to treat acid mist-containing industrial tail gas. In the present embodiment, the entrance 3031 communicates with a port for discharging industrial tail gas. The working principle of the electrocoagulation device in the present embodiment is as follows. The industrial tail gas flows into the housing 303 through the entrance 3031 and flows out through the exit 3032. In this process, the industrial tail gas will first flow through one of the first electrodes 301. When the acid mist in the industrial tail gas contacts the first electrode 301 or the distance between the industrial tail gas and the first electrode 301 reaches a certain value, the first electrode 301 will transfer electrons to the acid mist, and a part of the acid mist is charged. The second electrode 302 applies an attractive force to the charged acid mist, and the acid mist then moves towards the second electrode 302 and is attached to the second electrode 302. Another part of the acid mist is not attached to the second electrode 302. This part of the acid mist continues to flow in the direction of the exit 3032. When this part of the acid mist contacts the other first electrode 301 or the distance between this part of the acid mist and the other first electrode 301 reaches a certain value, this part of the acid mist is charged, and the housing 303 applies an adsorption force to this part of charged acid mist such that this part of the charged acid mist is attached to the inner wall of the housing 303, thereby greatly reducing the emission of the acid mist in the industrial tail gas. The treatment device in the present embodiment can remove 90% of the acid mist in the industrial tail gas, so the effect of removing the acid mist is quite significant. In the present embodiment, the entrance 3031 and the exit 3032 both have a circular shape. The entrance 3031 may also be referred to as a gas inlet, and the exit 3032 may also be referred to as a gas outlet.

### Embodiment 2

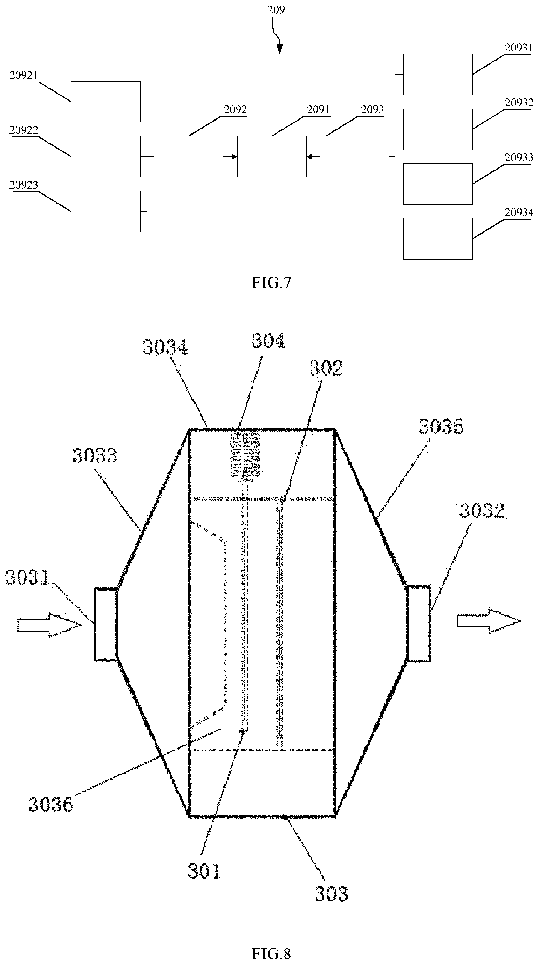

As shown in FIG. 7, an engine tail gas ozone purification system in Embodiment 1 further includes the ozone amount control device 209 configured to control the amount of ozone so as to effectively oxidize gas components to be treated in the tail gas. The ozone amount control device 209 includes a control unit 2091. The ozone amount control device 209 further includes a pre-ozone-treatment tail gas component detection unit 2092 configured to detect the contents of components in the tail gas before the ozone treatment. The control unit controls the amount of ozone required in the mixing and reaction according to the contents of components in the tail gas before the ozone treatment.

The pre-ozone-treatment tail gas component detection unit is at least one selected from the following detection units:
a first volatile organic compound detection unit 20921 configured to detect the content of volatile organic compounds in the tail gas before the ozone treatment, such as a volatile organic compound sensor;
a first CO detection unit 20922 configured to detect the CO content in the tail gas before the ozone treatment, such as a CO sensor; and
a first nitrogen oxide detection unit 20923 configured to detect the nitrogen oxide content in the tail gas before the ozone treatment, such as a nitrogen oxide (NOₓ) sensor.

The control unit controls the amount of ozone required in the mixing and reaction according to an output value of at least one of the pre-ozone-treatment tail gas component detection units.

The control unit is configured to control the amount of ozone required in the mixing and reaction according to a theoretically estimated value. The theoretically estimated value is a molar ratio of an ozone introduction amount to a substance to be treated in the tail gas, which is 2-10.

The ozone amount control device includes a post-ozone-treatment tail gas component detection unit 2093 configured to detect the contents of components in the tail gas after the ozone treatment. The control unit controls the amount of ozone required in the mixing and reaction according to the contents of components in the tail gas after the ozone treatment.

The post-ozone-treatment tail gas component detection unit is at least one selected from the following detection units:
a first ozone detection unit 20931 configured to detect the ozone content in the tail gas after the ozone treatment;
a second volatile organic compound detection unit 20932 configured to detect the content of volatile organic compounds in the tail gas after the ozone treatment;
a second CO detection unit 20933 configured to detect the CO content in the tail gas after the ozone treatment; and
a second nitrogen oxide detection unit 20934 configured to detect the nitrogen oxide content in the tail gas after the ozone treatment.

The control unit controls the amount of ozone according to an output value of at least one of the post-ozone-treatment tail gas component detection units.

### Embodiment 3

An ozone generator electrode is prepared by the following steps:
using an α-alumina panel with a length of 300 mm, a width of 30 mm, and a thickness of 1.5 mm as a barrier dielectric layer;
coating a catalyst (containing a coating layer and an active component) on a surface of the barrier dielectric layer, wherein after the catalyst is coated, the catalyst is 12% of the mass of the barrier dielectric layer, and wherein the catalyst includes the following components in percentages by weight: 12 wt% of the active component and 88 wt% of the coating layer, and wherein the active component is cerium oxide and zirconium oxide (the ratio of the amount of cerium oxide to zirconium oxide is 1:1.3), and the coating layer is gama alumina; and
pasting a copper foil on the other surface of the barrier dielectric layer coated with the catalyst to prepare an electrode.

A method for coating the catalyst in the above method is as follows:
(1) pouring 200 g of 800-mesh gama alumina powder, 5 g of cerous nitrate, 4 g of zirconium nitrate, 4 g of oxalic acid, 5 g of pseudoboehmite, 1 g of aluminum nitrate, and 0.5 g of EDTA (for decomposition) into an agate mill, then adding 1300 g of deionized water, followed by grinding at 200 rpm/min for 10 hours to prepare a slurry;
(2) placing the above-described barrier dielectric layer in an oven to be dried at 150 °C for 2 hours, wherein an oven fan is turned on during drying, then cooling the barrier dielectric layer to room temperature while keeping the oven door closed;
(3) loading the catalyst slurry into a high pressure spray gun to be uniformly sprayed onto a surface of the dried barrier dielectric layer and drying the sprayed barrier dielectric layer in a vacuum drier in the shade for 2 hours; and
(4) after the drying in the shade, heating the copper foil in a muffle furnace to 500 °C at a heating rate of 5 °C per minute, maintaining the temperature for two hours, and naturally cooling the copper foil to room temperature while keeping the furnace door closed, thus completing the coating process.

Four electrodes were prepared by the same method. Four electrodes of an XF-B-3-100 type ozone generator of Henan Dino Environmental Protection Technology Co., Ltd. were all replaced with the electrodes prepared above. A comparison test was carried out under the following test conditions: a pure oxygen gas source, an intake pressure of 0.6 MPa, an intake air volume of 1.5 cubic meters per hour, an alternating voltage, and a sine wave of 5000 V and 20000 Hz. The amount of ozone generated per hour was calculated from the gas outlet volume and the detected mass concentration.

The experimental results were as follows:
The original amount of ozone generation by the XF-B-3-100 type ozone generator was 120 g/h.
After the replacement of electrodes, the amount of ozone generation was 160 g/h under the same test conditions. Under the experimental conditions, the power consumption was 830 W.

### Embodiment 4

An ozone generator electrode is prepared by the following steps:
using an α-alumina panel with a length of 300 mm, a width of 30 mm, and a thickness of 1.5 mm as a barrier dielectric layer;
coating a catalyst (containing a coating layer and an active component) on a surface of the barrier dielectric layer, wherein after the catalyst is coated, the catalyst is 5% of the mass of the barrier dielectric layer, and wherein the catalyst includes the following components in percentages by weight: 15 wt% of the active component and 85 wt% of the coating layer in the total weight of the catalyst, and wherein the active component is MnO and CuO, and the coating layer is gama alumina; and
pasting a copper foil on the other surface of the barrier dielectric layer coated with the catalyst to prepare an electrode.

A method for coating the catalyst in the above method is as follows:
(1) pouring 200 g of 800-mesh gama alumina powder, 4 g of oxalic acid, 5 g of pseudoboehmite, 1 g of aluminum nitrate, and 0.5 g of a surfactant (for decomposition) into an agate mill, then adding 1300 g of deionized water, followed by grinding at 200 rpm/min for 10 hours to prepare a slurry;
(2) placing the above-described barrier dielectric layer in an oven to be dried at 150 °C for 2 hours, wherein an oven fan is turned on during drying, then cooling the barrier dielectric layer to room temperature while keeping the oven door closed, wherein the water absorption capacity (A) of the barrier dielectric layer is measured by measuring the change in mass between before and after the drying;
(3) loading the above-described slurry into a high pressure spray gun to be uniformly sprayed onto a surface of the dried barrier dielectric layer and drying the sprayed barrier dielectric layer in a vacuum drier in the shade for 2 hours;
(4) after the drying in the shade, heating the copper foil in a muffle furnace to 500 °C at a heating rate of 5 °C per minute, maintaining the temperature for two hours, naturally cooling the copper foil to room temperature while keeping the furnace door closed, and weighting.
(5) immersing the above-described barrier dielectric layer loaded with the coating layer in water for 1 minute, then taking out the barrier dielectric layer, blowing off surface floating water, and weighing to calculate the water absorption capacity (B) thereof;
   calculating the net water absorption capacity C (C=B-A) of the coating layer, and based on a target loading amount of the active component and the net water absorption capacity C of the coating layer, calculating the concentration of an aqueous solution of the active component, thereby preparing the solution of the active component; (the target load capacity of the active component is 0.1 g of CuO; 0.2 g of MnO);
(7) drying the barrier dielectric layer loaded with the coating layer at 150 for 2 hours, and cooling the barrier dielectric layer to room temperature while keeping the oven door closed, wherein the surface that does not need to be loaded with the active component is protected against water; and
(8) loading a solution of the active component (copper nitrate and manganese nitrate) prepared in step (6) into the coating layer by a dipping method, blowing off surface floating liquid, drying the barrier dielectric layer at 150 for 2 hours, transferring the barrier dielectric layer into a muffle furnace to be roasted, heating the barrier dielectric layer to 550 at a rate of 15 per minute, maintaining the temperature for 3 hours, slightly opening the furnace door, and cooling to room temperature, thus completing the coating process.

Four electrodes were prepared by the same method. Four electrodes of an XF-B-3-100 type ozone generator of Henan Dino Environmental Protection Technology Co., Ltd. were all replaced with the electrodes prepared above. A comparison test was carried out under the following test conditions: a pure oxygen gas source, an intake pressure of 0.6 MPa, an intake air volume of 1.5 cubic meters per hour, an alternating voltage, and a sine wave of 5000 V and 20000 Hz. The amount of ozone generated per hour was calculated from the gas outlet volume and the detected mass concentration.

The experimental results were as follows:
The original amount of ozone generation by the XF-B-3-100 type ozone generator was 120 g/h.
After the replacement of electrodes, the amount of ozone generation was 168g/h under the same test conditions. Under the experimental conditions, the power consumption was 830 W.

### Embodiment 5

An ozone generator electrode is prepared by the following steps:
using a quartz glass plate with a length of 300 mm, a width of 30 mm, and a thickness of 1.5 mm as a barrier dielectric layer;
coating a catalyst (containing a coating layer and an active component) on a surface of the barrier dielectric layer, wherein after the catalyst is coated, the catalyst is 1% of the mass of the barrier dielectric layer, and wherein the catalyst includes the following components in percentages by weight: 5 wt% of the active component and 95 wt% of the coating layer, and wherein the active components are silver, rhodium, platinum, cobalt and lanthanum (the mass ratio of the substances in the order listed is 1:1:1:2:1.5), and the coating layer is zirconium oxide; and
pasting a copper foil on the other surface of the barrier dielectric layer coated with the catalyst to prepare an electrode.

A method for coating the catalyst in the above method is as follows:
(1) pouring 400 g of zirconium oxide, 1.7 g of silver nitrate, 2.89 g of rhodium nitrate, 3.19 g of platinum nitrate, 4.37 g of cobalt nitrate, 8.66 g of lanthanum nitrate, 15 g of oxalic acid, and 25 g of EDTA (for decomposition) into an agate mill, then adding 1500 g of deionized water, followed by grinding at 200 rpm/min for 10 hours to prepare a slurry;
(2) placing the above-described barrier dielectric layer in an oven to be dried at 150 °C for 2 hours, wherein an oven fan is turned on during drying, then cooling the barrier dielectric layer to room temperature while keeping the oven door closed;
(3) loading the catalyst slurry into a high pressure spray gun to be uniformly sprayed onto a surface of the dried barrier dielectric layer and drying the sprayed barrier dielectric layer in a vacuum drier in the shade for 2 hours; and
(4) after the drying in the shade, heating the barrier dielectric layer in a muffle furnace to 550 °C at a heating rate of 5 °C per minute, maintaining the temperature for two hours, naturally cooling the barrier dielectric layer to room temperature while keeping the furnace door closed; and then performing reduction at 220 °C in a hydrogen reducing atmosphere for 1.5 hours, thereby completing the coating process.

Four electrodes were prepared by the same method. Four electrodes of an XF-B-3-100 type ozone generator of Henan Dino Environmental Protection Technology Co., Ltd. were all replaced with the electrodes prepared above. A comparison test was carried out under the following test conditions: a pure oxygen gas source, an intake pressure of 0.6 MPa, an intake air volume of 1.5 cubic meters per hour, an alternating voltage, and a sine wave of 5000 V and 20000 Hz. The amount of ozone generated per hour was calculated from the gas outlet volume and the detected mass concentration.

The experimental results were as follows:
The original amount of ozone generation by the XF-B-3-100 type ozone generator was 120 g/h.
After the replacement of electrodes, the amount of ozone generation was 140g/h under the same test conditions. Under the experimental conditions, the power consumption was 830 W.

### Embodiment 6

An ozone generator electrode is prepared by the following steps:
coating a catalyst (containing a coating layer and an active component) on one surface of a copper foil (electrode), wherein after the catalyst is coated, the catalyst has a thickness of 1.5 mm, and
wherein the catalyst includes the following components in percentages by weight: 8 wt% of the active component and 92 wt% of the coating layer, and wherein the active components are zinc sulfate, calcium sulfate, titanium sulfate, and magnesium sulfate (the mass ratio of the substances in the order listed is 1:2:1:1), and the coating layer is graphene.

A method for coating the catalyst in the above method is as follows: (1) pouring 100 g of graphene, 1.61 g of zinc sulfate, 3.44 g of calcium sulfate, 2.39 g of titanium sulfate, 1.20 g of magnesium sulfate, 25 g of oxalic acid, and 15 g of EDTA (for decomposition) into an agate mill, then adding 800 g of deionized water, followed by grinding at 200 rpm/min for 10 hours to prepare a slurry;
(2) loading the catalyst slurry into a high pressure spray gun to be uniformly sprayed onto a surface of the copper foil (electrode), and drying the sprayed copper foil in a vacuum drier in the shade for 2 hours; and
(3) after the drying in the shade, heating the copper foil in a muffle furnace to 350 °C at a heating rate of 5 °C per minute, maintaining the temperature for two hours, and naturally cooling the copper foil to room temperature while keeping the furnace door closed,

Four electrodes were prepared by the same method. Four electrodes of an XF-B-3-100 type ozone generator of Henan Dino Environmental Protection Technology Co., Ltd. were all replaced with the electrodes prepared above. A comparison test was carried out under the following test conditions: a pure oxygen gas source, an intake pressure of 0.6 MPa, an intake air volume of 1.5 cubic meters per hour, an alternating voltage, and a sine wave of 5000 V and 20000 Hz. The amount of ozone generated per hour was calculated from the gas outlet volume and the detected mass concentration.

The experimental results were as follows:
The original amount of ozone generation by the XF-B-3-100 type ozone generator was 120 g/h.
After the replacement of electrodes, the amount of ozone generation was 165g/h under the same test conditions. Under the experimental conditions, the power consumption was 830 W.

### Embodiment 7

An ozone generator electrode is prepared by the following steps:
coating a catalyst (containing a coating layer and an active component) on one surface of a copper foil (electrode), wherein after the catalyst is coated, the catalyst has a thickness of 3 mm, and wherein the catalyst includes the following components in percentages by weight: 10 wt% of the active component and 90 wt% of the coating layer, and wherein the active components are praseodymium oxide, samarium oxide and yttrium oxide (the mass ratio of the substances in the order listed is 1:1:1), and the coating layer is cerium oxide and manganese oxide (the mass ratio of the cerium oxide to manganese oxide is 1:1).

A method for coating the catalyst in the above method is as follows:
(1) pouring 62.54 g of cerium oxide, 31.59 g of manganese oxide, 3.27 g of praseodymium nitrate, 3.36 g of samarium nitrate, 3.83 g of yttrium nitrate, 12 g of oxalic acid, and 20 g of EDTA (for decomposition) into an agate mill, then adding 800 g of deionized water, followed by grinding at 200 rpm/min for 10 hours to prepare a slurry; (2) loading the catalyst slurry into a high pressure spray gun to be uniformly sprayed onto a surface of the copper foil (electrode), and drying the sprayed copper foil in a vacuum drier in the shade for 2 hours; and
(3) after the drying in the shade, heating the copper foil in a muffle furnace to 500 °C at a heating rate of 5 °C per minute, maintaining the temperature for two hours, and naturally cooling the copper foil to room temperature while keeping the furnace door closed,

Four electrodes were prepared by the same method. Four electrodes of an XF-B-3-100 type ozone generator of Henan Dino Environmental Protection Technology Co., Ltd. were all replaced with the electrodes prepared above. A comparison test was carried out under the following test conditions: a pure oxygen gas source, an intake pressure of 0.6 MPa, an intake air volume of 1.5 cubic meters per hour, an alternating voltage, and a sine wave of 5000 V and 20000 Hz. The amount of ozone generated per hour was calculated from the gas outlet volume and the detected mass concentration.

The experimental results were as follows:
The original amount of ozone generation by the XF-B-3-100 type ozone generator was 120 g/h.
After the replacement of electrodes, the amount of ozone generation was 155g/h under the same test conditions. Under the experimental conditions, the power consumption was 830 W.

### Embodiment 8

An ozone generator electrode is prepared by the following steps:
coating a catalyst (containing a coating layer and an active component) on one surface of a copper foil (electrode), wherein after the catalyst is coated, the catalyst has a thickness of 1 mm, and the wherein catalyst includes the following components in percentages by weight: 14 wt% of the active component and 86 wt% of the coating layer, and wherein the active component is strontium sulfide, nickel sulfide, tin sulfide and iron sulfide (the mass ratio of the substances in the listed order is 2:1:1:1), and the coating layer is diatomaceous earth with a porosity of 80%, a specific surface area of 350 m²/g, and a mean pore size of 30 nm.

A method for coating the catalyst in the above method is as follows:
(1) pouring 58 g of diatomaceous earth, 3.66 g of strontium sulfate, 2.63 g of nickel sulfate, 2.18 g of stannous sulfate, 2.78 g of ferrous sulfate, 3 g of oxalic acid, and 5 g of EDTA (for decomposition) into an agate mill, then adding 400 g of deionized water, followed by grinding at 200 rpm/min for 10 hours to prepare a slurry;
(2) loading the catalyst slurry into a high pressure spray gun to be uniformly sprayed onto a surface of the copper foil (electrode), and drying the sprayed copper foil in a vacuum drier in the shade for 2 hours; and
(3) after the drying in the shade, heating the copper foil in a muffle furnace to 500 °C at a heating rate of 5 °C per minute, maintaining the temperature for two hours, naturally cooling the copper foil to room temperature while keeping the furnace door closed; and then introducing CO to perform a sulfuration reaction, thereby completing the coating process.

Four electrodes were prepared by the same method. Four electrodes of an XF-B-3-100 type ozone generator of Henan Dino Environmental Protection Technology Co., Ltd. were all replaced with the electrodes prepared above. A comparison test was carried out under the following test conditions: a pure oxygen gas source, an intake pressure of 0.6 MPa, an intake air volume of 1.5 cubic meters per hour, an alternating voltage, and a sine wave of 5000 V and 20000 Hz. The amount of ozone generated per hour was calculated from the gas outlet volume and the detected mass concentration.

The experimental results were as follows:
The original amount of ozone generation by the XF-B-3-100 type ozone generator was 120 g/h.
After the replacement of electrodes, the amount of ozone generation was 155g/h under the same test conditions. Under the experimental conditions, the power consumption was 830 W.

### Embodiment 9

As shown in FIG. 8 to FIG. 10, the present embodiment provides an electrocoagulation device including the following:
a first electrode 301 capable of conducting electrons to nitric acid-containing water mist, wherein
the nitric acid-containing water mist is charged when the electrons are conducted to the nitric acid-containing water mist; and
a second electrode 302 capable of applying an attractive force to the charged water mist.

As shown in FIG. 8, in the present embodiment, the electrocoagulation device further includes an electrocoagulation housing 303 having an electrocoagulation entrance 3031 and an electrocoagulation exit 3032. The first electrode 301 and the second electrode 302 are both mounted in the electrocoagulation housing 303. The first electrode 301 is fixedly connected to an inner wall of the electrocoagulation housing 303 through an electrocoagulation insulating part 304, and the second electrode 302 is directly fixedly connected to the electrocoagulation housing 303. In the present embodiment, the electrocoagulation insulating part 304 has a columnar shape and is also referred to as an insulating column. In another embodiment, the electrocoagulation insulating part 304 may further have a tower-like shape or the like. The electrocoagulation insulating part 304 is mainly used for preventing pollution and preventing electric leakage. In the present embodiment, the first electrode 301 and the second electrode 302 are both net-shaped and are both located between the electrocoagulation entrance 3031 and the electrocoagulation exit 3032. The first electrode 301 has a negative potential, and the second electrode 302 has a positive potential. In the present embodiment, the electrocoagulation housing 303 has the same potential as the second electrode 302. The electrocoagulation housing 303 also plays a role in adsorbing charged substances. In the present embodiment, the electrocoagulation housing is provided therein with an electrocoagulation flow channel 3036. The first electrode 301 and the second electrode 302 are both mounted in the electrocoagulation flow channel 3036, and the ratio of the cross-sectional area of the first electrode 301 to the cross-sectional area of the electrocoagulation flow channel 3036 is 99%-10%, 90-10%, 80-20%, 70-30%, 60-40%, or 50%.

In the present embodiment, the electrocoagulation device can further be used to treat acid mist-containing industrial tail gas. In the present embodiment, when the electrocoagulation device is used to treat acid mist-containing industrial tail gas, the electrocoagulation entrance 3031 communicates with a port for discharging the industrial tail gas. As shown in FIG. 8, in the present embodiment, the working principle of the electrocoagulation device is as follows. The industrial tail gas flows into the electrocoagulation housing 303 through the electrocoagulation entrance 3031 and flows out through the electrocoagulation exit 3032. During this process, the industrial tail gas will flow through the first electrode 301, and when the acid mist in the industrial tail gas contacts the first electrode 301 or the distance between the industrial tail gas and the first electrode 301 reaches a certain value, the first electrode 301 transfers electrons to the acid mist and the acid mist is charged. The second electrode 302 applies an attractive force to the charged acid mist, which moves towards the second electrode 302 and is attached to the second electrode 302. As the acid mist has the characteristics of being easily charged and easily losing electricity, a given charged mist drop will lose electricity in the process of moving towards the second electrode 302, at which time other charged mist drops will in turn quickly transfer electrons to the mist drop losing electricity. If this process is repeated, the given mist drop will be in a continuously charged state. The second electrode 302 can then continuously apply an attractive force to the mist drop and allow the mist drop to be attached to the second electrode 302, thus realizing removal of acid mist in the industrial tail gas and avoiding direct discharge of the acid mist into the atmosphere to cause pollution of the atmosphere. In the present embodiment, the first electrode 301 and the second electrode 302 constitute an adsorption unit. In the case where there is only one adsorption unit, the electrocoagulation device in the present embodiment can remove 80% of the acid mist in industrial tail gas and greatly reduce the emission of acid mist. Therefore, the electrocoagulation device possesses a significant environmental protection effect.

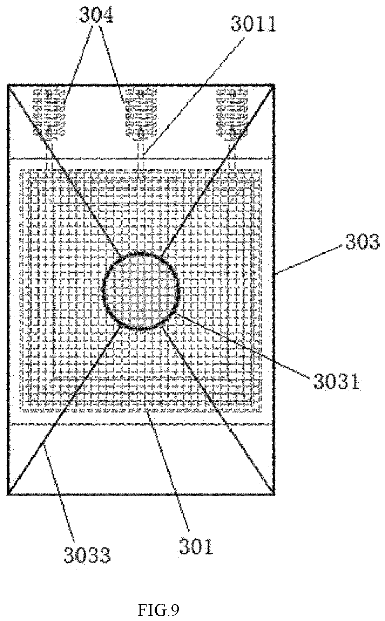

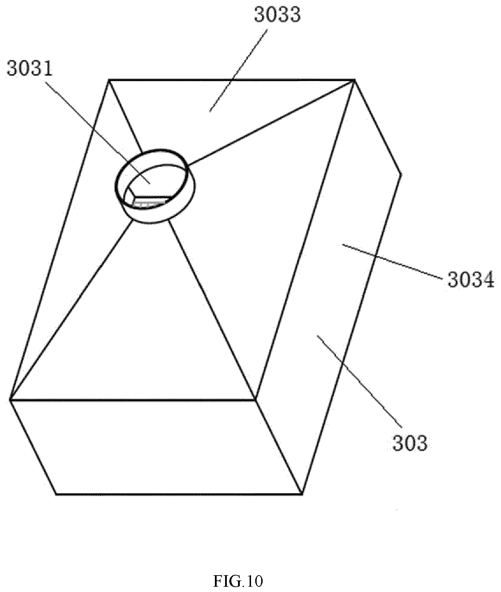

As shown in FIG. 10, in the present embodiment, the first electrode 301 is provided with three front connecting portions 3011 which are fixedly connected with three connecting portions on an inner wall of the electrocoagulation housing 303 through three electrocoagulation insulating parts 304. This manner of connection can effectively enhance the connection strength between the first electrode 301 and the electrocoagulation housing 303. In the present embodiment, the front connecting portions 3011 have a cylindrical shape, while in other embodiments, the front connecting portions 3011 may also have a tower-like shape or the like. In the present embodiment, the electrocoagulation insulating parts 304 have a cylindrical shape, while in other embodiments, the electrocoagulation insulating parts 304 may also have a tower-like shape or the like. In the present embodiment, a rear connecting portion has a cylindrical shape, while in other embodiments, the electrocoagulation insulating parts 304 may also have a tower-like shape or the like. As shown in FIG. 9, in the present embodiment, the electrocoagulation housing 303 includes a first housing portion 3033, a second housing portion 3034, and a third housing portion 3035 disposed in this order in the direction from the electrocoagulation entrance 3031 to the electrocoagulation exit 3032. The electrocoagulation entrance 3031 is located at one end of the first housing portion 3033, and the electrocoagulation exit 3032 is located at one end of the third housing portion 3035. The size of the outline of the first housing portion 3033 gradually increases in the direction from the electrocoagulation entrance 3031 to the electrocoagulation exit 3032, and the size of the outline of the third housing portion 3035 gradually decreases in the direction from the electrocoagulation entrance 3031 to the electrocoagulation exit 3032. In the present embodiment, the cross section of the second housing portion 3034 is rectangular. In the present embodiment, the electrocoagulation housing 303 adopts the above-described structural design such that the tail gas reaches a certain inlet flow rate at the electrocoagulation entrance 3031, and more importantly, a more uniform distribution of the airflow can be achieved. Furthermore, a medium in the tail gas, such as mist drops, can be more easily charged under the excitation of the first electrode 301. In addition, it is easier to encapsulate the electrocoagulation housing 303, the amount of materials which are used is decreased, space is saved, pipelines can be used for connection, and the housing is conducive to insulation. Any electrocoagulation housing 303 that can achieve the above effect is acceptable.

In the present embodiment, the electrocoagulation entrance 3031 and the electrocoagulation exit 3032 both have a circular shape. The electrocoagulation entrance 3031 can also be referred to as a gas inlet, and the electrocoagulation exit 3032 can also be referred to as a gas outlet. In the present embodiment, the electrocoagulation entrance 3031 has a diameter of 300 mm-1000 mm and specifically 500 mm. In the present embodiment, the electrocoagulation entrance 3031 has a diameter of 300 mm-1000 mm, and specifically 500 mm.

### Embodiment 10

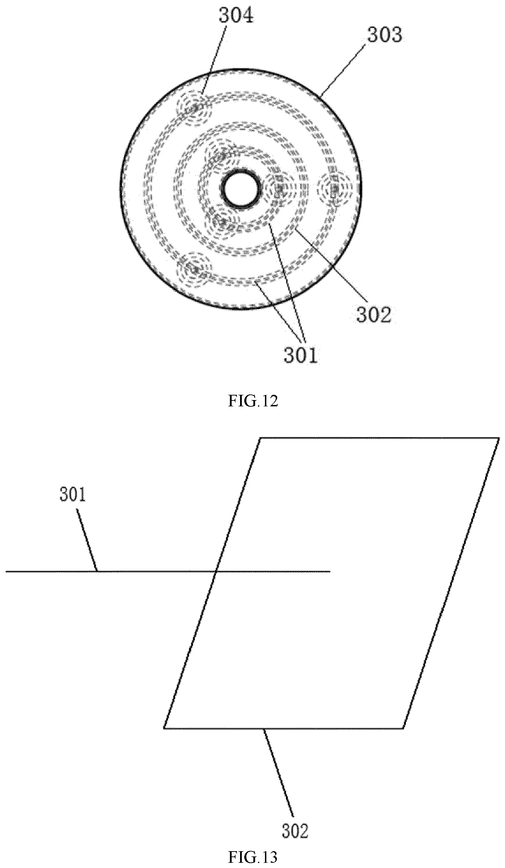

As shown in FIG. 11 and FIG. 12, the present embodiment provides an electrocoagulation device including the following:
a first electrode 301 capable of conducting electrons to nitric acid-containing water mist, wherein
the nitric acid-containing water mist is charged when the electrons are conducted to the nitric acid-containing water mist; and
a second electrode 302 capable of applying an attractive force to the charged water mist.

As shown in FIG. 11 and FIG. 12, in the present embodiment, there are two first electrodes 301, both having a net shape and a ball-cage shape. In the present embodiment, there is one second electrode 302, which has a net shape and a ball-cage shape. The second electrode 302 is located between the two first electrodes 301. As shown in FIG. 11, in the present embodiment, the electrocoagulation device further includes an electrocoagulation housing 303 having an electrocoagulation entrance 3031 and an electrocoagulation exit 3032. The first electrode 301 and the second electrode 302 are both mounted in the electrocoagulation housing 303. The first electrode 301 is fixedly connected to an inner wall of the electrocoagulation housing 303 through an electrocoagulation insulating part 304, and the second electrode 302 is directly fixedly connected to the electrocoagulation housing 303. In the present embodiment, the electrocoagulation insulating part 304 has a columnar shape and is also referred to as an insulating column. In the present embodiment, the first electrodes 301 have a negative potential, and the second electrode 302 has a positive potential. In the present embodiment, the electrocoagulation housing 303 has the same potential as the second electrode 302. The electrocoagulation housing 303 also plays a role in adsorbing charged substances.

In the present embodiment, the electrocoagulation device can further be used to treat acid mist-containing industrial tail gas. In the present embodiment, the electrocoagulation entrance 3031 can communicate with a port for discharging industrial tail gas. As shown in FIG. 11, the working principle of the electrocoagulation device in the present embodiment is as follows. The industrial tail gas flows into the electrocoagulation housing 303 from the electrocoagulation entrance 3031 and flows out through the electrocoagulation exit 3032. In this process, the industrial tail gas will first flow through one of the first electrodes 301. When the acid mist in the industrial tail gas contacts this first electrode 301 or the distance between the industrial tail gas and this first electrode 301 reaches a certain value, the first electrode 301 will transfer electrons to the acid mist, and a part of the acid mist is charged. The second electrode 302 applies an attractive force to the charged acid mist, and the acid mist moves towards the second electrode 302 and is attached to the second electrode 302. Another part of the acid mist is not adsorbed onto the second electrode 302. This part of the acid mist continues to flow in the direction of the electrocoagulation exit 3032. When this part of the acid mist contacts the other first electrode 301 or the distance between this part of the acid mist and the other first electrode 301 reaches a certain value, this part of the acid mist will be charged. The electrocoagulation housing 303 applies an adsorption force to this part of the charged acid mist such that this part of the charged acid mist is attached to the inner wall of the electrocoagulation housing 303, thereby greatly reducing the emission of the acid mist in the industrial tail gas. The treatment device in the present embodiment can remove 90% of the acid mist in the industrial tail gas, so the effect of removing the acid mist is quite significant. In the present embodiment, the electrocoagulation entrance 3031 and the electrocoagulation exit 3032 both have a circular shape. The electrocoagulation entrance 3031 may also be referred to as a gas inlet, and the electrocoagulation exit 3032 may also be referred to as a gas outlet.

### Embodiment 11

As shown in FIG. 13, the present embodiment provides an electrocoagulation device including the following:
a first electrode 301 capable of conducting electrons to nitric acid-containing water mist, wherein
the nitric acid-containing water mist is charged when the electrons are conducted to the nitric acid-containing water mist; and
a second electrode 302 capable of applying an attractive force to the charged water mist.

In the present embodiment, the first electrode 301 is needle-shaped and has a negative potential. In the present embodiment, the second electrode 302 has a planar shape and has a positive potential. The second electrode 302 is also referred to as a collector. In the present embodiment, the second electrode 302 specifically has a flat surface shape, and the first electrode 301 is perpendicular to the second electrode 302. In the present embodiment, a line-plane electric field is formed between the first electrode 301 and the second electrode 302.

### Embodiment 12

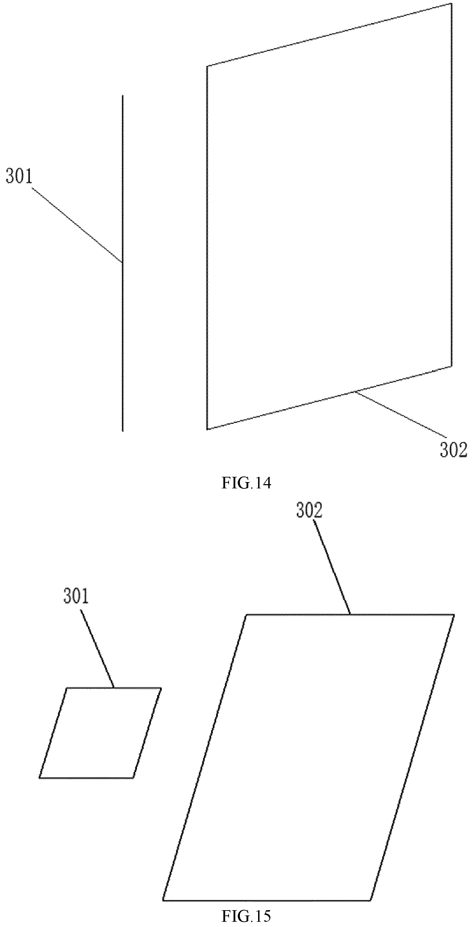

As shown in FIG. 14, the present embodiment provides an electrocoagulation device including the following:
a first electrode 301 capable of conducting electrons to nitric acid-containing water mist, wherein
the nitric acid-containing water mist is charged when the electrons are conducted to the nitric acid-containing water mist; and
a second electrode 302 capable of applying an attractive force to the charged water mist.

In the present embodiment, the first electrode 301 has a linear shape and has a negative potential. In the present embodiment, the second electrode 302 has a planar shape and has a positive potential. The second electrode 302 is also referred to as a collector. In the present embodiment, the second electrode 302 specifically has a flat surface shape and is parallel to the second electrode 302. In the present embodiment, a line-plane electric field is formed between the first electrode 301 and the second electrode 302.

### Embodiment 13

As shown in FIG. 15, the present embodiment provides an electrocoagulation device including the following:
a first electrode 301 capable of conducting electrons to nitric acid-containing water mist, wherein
the nitric acid-containing water mist is charged when the electrons are conducted to the nitric acid-containing water mist; and
a second electrode 302 capable of applying an attractive force to the charged water mist.

In the present embodiment, the first electrode 301 has a net-like shape and a negative potential. In the present embodiment, the second electrode 302 has a planar shape and has a positive potential. The second electrode 302 is also referred to as a collector. In the present embodiment, the second electrode 302 specifically has a flat surface shape and is parallel to the second electrode 302. In the present embodiment, a net-plane electric field is formed between the first electrode 301 and the second electrode 302. In the present embodiment, the first electrode 301 has a net-shaped structure made of metal wires, and the first electrode 301 is made of metal wires. In the present embodiment, the area of the second electrode 302 is greater than the area of the first electrode 301.

### Embodiment 14

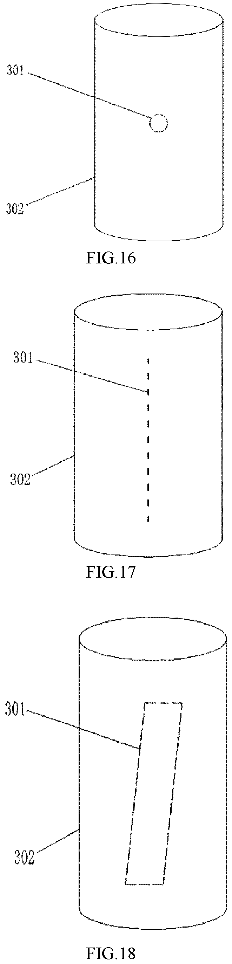

As shown in FIG. 16, the present embodiment provides an electrocoagulation device including the following:
a first electrode 301 capable of conducting electrons to nitric acid-containing water mist, wherein
the nitric acid-containing water mist is charged when the electrons are conducted to the nitric acid-containing water mist; and
a second electrode 302 capable of applying an attractive force to the charged water mist.

In the present embodiment, the first electrode 301 has a point shape and a negative potential. In the present embodiment, the second electrode 302 has a barrel shape and a positive potential. The second electrode 302 is also referred to as a collector. In the present embodiment, the first electrode 301 is held in place by metal wires or metal needles. In the present embodiment, the first electrode 301 is located at a geometric center of symmetry of the barrel-shaped second electrode 302. In the present embodiment, a point-barrel electric field is formed between the first electrode 301 and the second electrode 302.

### Embodiment 15

As shown in FIG. 17, the present embodiment provides an electrocoagulation device including the following:
a first electrode 301 capable of conducting electrons to nitric acid-containing water mist, wherein
the nitric acid-containing water mist is charged when the electrons are conducted to the nitric acid-containing water mist; and
a second electrode 302 capable of applying an attractive force to the charged water mist.

In the present embodiment, the first electrode 301 has a linear shape and has a negative potential. In the present embodiment, the second electrode 302 has a barrel shape and a positive potential. The second electrode 302 is also referred to as a collector. In the present embodiment, the first electrode 301 is held in place by metal wires or metal needles. In the present embodiment, the first electrode 301 is located on a geometric axis of symmetry of the barrel-shaped second electrode 302. In the present embodiment, a line-barrel electric field is formed between the first electrode 301 and the second electrode 302.

### Embodiment 16

As shown in FIG. 18, the present embodiment provides an electrocoagulation device including the following:
a first electrode 301 capable of conducting electrons to nitric acid-containing water mist, wherein
the nitric acid-containing water mist is charged when the electrons are conducted to the nitric acid-containing water mist; and
a second electrode 302 capable of applying an attractive force to the charged water mist.

In the present embodiment, the first electrode 301 has a net-like shape and a negative potential. In the present embodiment, the second electrode 302 has a barrel shape and a positive potential. The second electrode 302 is also referred to as a collector. In the present embodiment, the first electrode 301 is held in place by metal wires or metal needles. In the present embodiment, the first electrode 301 is located at a geometric center of symmetry of the barrel-shaped second electrode 302. In the present embodiment, a net-barrel electrocoagulation electric field is formed between the first electrode 301 and the second electrode 302.

### Embodiment 17

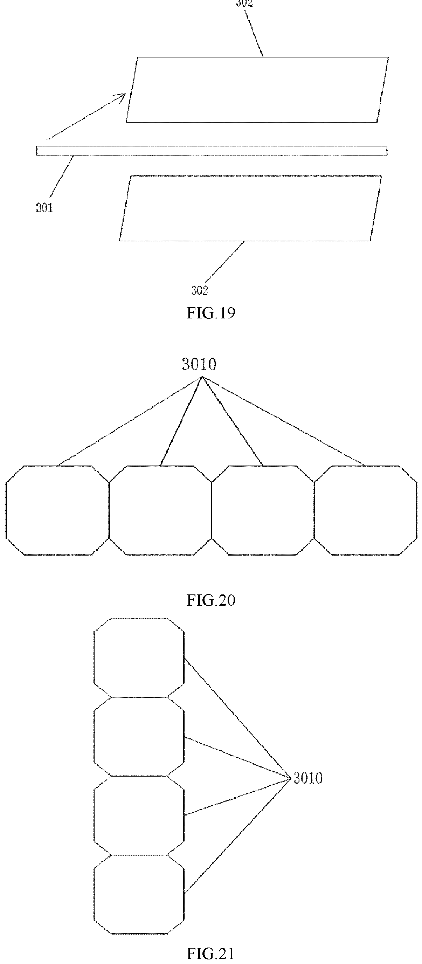

As shown in FIG. 19, the present embodiment provides an electrocoagulation device including the following:
a first electrode 301 capable of conducting electrons to nitric acid-containing water mist, wherein
the nitric acid-containing water mist is charged when the electrons are conducted to the nitric acid-containing water mist; and
a second electrode 302 capable of applying an attractive force to the charged water mist.

In the present embodiment, there are two second electrodes 302, and the first electrode 301 is located between the two second electrodes 302. The length of the first electrode 301 in the left-right direction is greater than the length of each second electrode 302 in the left-right direction. The left end of the first electrode 301 is located to the left of each second electrode 302. The left end of the first electrode 301 and the left ends of the second electrodes 302 form an obliquely extending power line. In the present embodiment, an asymmetrical electrocoagulation electric field is formed between the first electrode 301 and the second electrodes 302. In use, a water mist (which is a low specific resistance substance), such as mist drops, enters between the two second electrodes 302 from the left. After being charged, a part of the mist drops moves obliquely from the left end of the first electrode 301 towards the left ends of the second electrodes 302. Thus, charging applies a pulling action on the mist drops.

### Embodiment 18

As shown in FIG. 20, the present embodiment provides an electrocoagulation device including the following:
a first electrode capable of conducting electrons to nitric acid-containing water mist, wherein the nitric acid-containing water mist is charged when the electrons are conducted to the nitric acid-containing water mist; and
a second electrode capable of applying an attractive force to the charged water mist.

In the present embodiment, the first electrode and the second electrode constitute an adsorption unit 3010. In the present embodiment, there is a plurality of adsorption units 3010, all of which are distributed in a horizontal direction. Specifically, in the present embodiment, all of the adsorption units 3010 are distributed along a left-right direction.

### Embodiment 19

As shown in FIG. 21, the present embodiment provides an electrocoagulation device including the following:
a first electrode capable of conducting electrons to nitric acid-containing water mist, wherein the nitric acid-containing water mist is charged when the electrons are conducted to the nitric acid-containing water mist; and
a second electrode capable of applying an attractive force to the charged water mist.

In the present embodiment, the first electrode and the second electrode constitute an adsorption unit 3010. In the present embodiment, there is a plurality of adsorption units 3010, all of which are distributed along an up-down direction.

### Embodiment 20

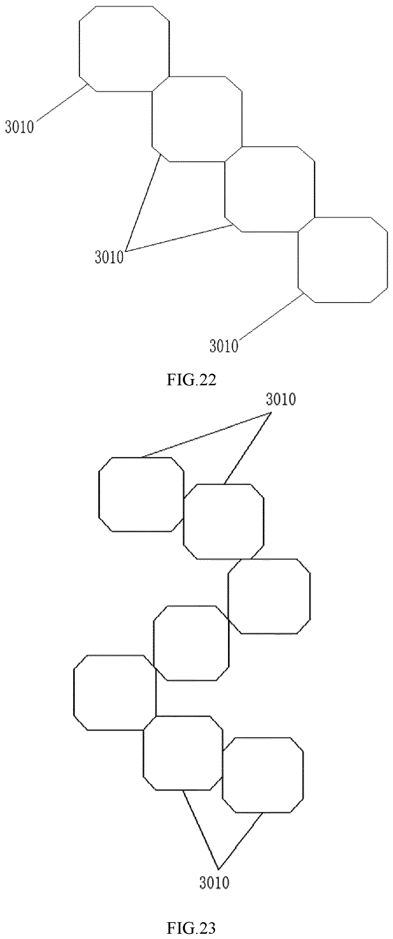

As shown in FIG. 22, the present embodiment provides an electrocoagulation device including the following:
a first electrode capable of conducting electrons to nitric acid-containing water mist, wherein the nitric acid-containing water mist is charged when the electrons are conducted to the nitric acid-containing water mist; and
a second electrode capable of applying an attractive force to the charged water mist.

In the present embodiment, the first electrode and the second electrode constitute an adsorption unit 3010. In the present embodiment, there is a plurality of adsorption units 3010, all of which are distributed obliquely.

### Embodiment 21

As shown in FIG. 23, the present embodiment provides an electrocoagulation device including the following:
a first electrode capable of conducting electrons to nitric acid-containing water mist, wherein the nitric acid-containing water mist is charged when the electrons are conducted to the nitric acid-containing water mist; and
a second electrode capable of applying an attractive force to the charged water mist.

In the present embodiment, the first electrode and the second electrode constitute an adsorption unit 3010. In the present embodiment, there are a plurality of the adsorption units 3010, all of which are distributed along a spiral direction.

### Embodiment 22

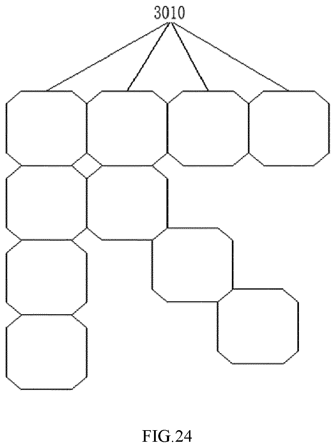

As shown in FIG. 24, the present embodiment provides an electrocoagulation device including the following:
a first electrode capable of conducting electrons to nitric acid-containing water mist, wherein the nitric acid-containing water mist is charged when the electrons are conducted to the nitric acid-containing water mist; and
a second electrode capable of applying an attractive force to the charged water mist.

In the present embodiment, the first electrode and the second electrode constitute an adsorption unit 3010. In the present embodiment, there are a plurality of the adsorption units 3010, all of which are distributed along a left-right direction, an up-down direction, and an oblique direction. In conclusion, the present invention effectively overcomes various defects in the prior art and has high industrial utilization value.

The above embodiments merely illustratively describe the principles of the present invention and effects thereof, rather than limiting the present invention. Anyone familiar with this technology can modify or change the above embodiments without departing from the spirit and scope of the present invention. Therefore, all equivalent modifications or changes made by those with ordinary knowledge in the technical field to which they belong without departing from the spirit and technical ideas disclosed in the present invention should still be covered by the claims of the present invention.

## Claims

1. An engine exhaust ozone purification method, **characterized in that** it includes the following steps: mixing and reacting the ozone stream with the exhaust stream.

2. The method for purifying an engine exhaust ozone according to claim 1, wherein the method for purifying the exhaust gas ozone further comprises the step of: removing nitric acid in the mixed reaction product of the ozone stream and the exhaust gas stream.

3. The method for purifying an engine exhaust ozone according to claim 2, wherein the gas with nitric acid mist flows through the first electrode; when the gas with nitric acid mist flows through the first electrode, the first electrode causes nitric acid in the gas The mist is charged, and the second electrode applies an attractive force to the charged nitric acid mist, so that the nitric acid mist moves toward the second electrode until the nitric acid mist adheres to the second electrode.

4. The method for purifying engine exhaust ozone according to claim 3, **characterized in that** the first electrode introduces electrons into the nitric acid mist, and the electrons are transferred between the mist droplets between the first electrode and the second electrode to make more mist droplets charged.

5. The method for purifying an engine exhaust ozone according to claim 3 or 4, wherein a nitric acid mist conducts electrons between the first electrode and the second electrode and forms an electric current.

6. The method for purifying an engine exhaust ozone according to any one of claims 3 to 5, wherein the first electrode charges the nitric acid mist by contact with the nitric acid mist.

7. The method for purifying engine exhaust ozone according to any one of claims 3 to 6, wherein the first electrode charges the nitric acid mist by means of energy fluctuation.

8. The method for purifying an engine exhaust ozone according to any one of claims 3 to 7, wherein the nitric acid mist attached to the second electrode forms water droplets, and the water droplets on the second electrode flow into the collection tank.

9. The method for purifying engine exhaust ozone according to claim 8, wherein the water droplets on the second electrode flow into the collection tank under the action of gravity.

10. The method for purifying an engine exhaust ozone according to claim 8 or 9, wherein when the gas flows, the blowing water droplets flow into the collection tank.

11. The method for purifying engine exhaust ozone according to any one of claims 3 to 10, wherein the first electrode is located in the electrocoagulation flow channel; the gas with nitric acid mist flows along the electrocoagulation flow channel and flows through the first electrode; The ratio of the cross-sectional area of the first electrode to the cross-sectional area of the electrocoagulation channel is 99% -10%, or 90-10%, or 80-20%, or 70-30%, or 60-40%, or 50%.
